(19) **Europäisches Patentamt / European Patent Office / Office européen des brevets**

(11) **EP 4 362 342 A1**

(12) # EUROPEAN PATENT APPLICATION
published in accordance with Art. 153(4) EPC

(43) Date of publication:
**01.05.2024 Bulletin 2024/18**

(21) Application number: **22827633.3**

(22) Date of filing: **22.06.2022**

(51) International Patent Classification (IPC):
**H04B 7/0417** (2017.01)

(52) Cooperative Patent Classification (CPC):
**H04B 7/0417; H04B 7/0456; H04B 7/06**

(86) International application number:
**PCT/CN2022/100576**

(87) International publication number:
**WO 2022/268141 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 CN 202110690582**

(71) Applicant: **Datang Mobile Communications Equipment Co., Ltd.**
**Beijing 100085 (CN)**

(72) Inventors:
• **LIU, Zhengxuan**
  **Beijing 100085 (CN)**
• **GAO, Qiubin**
  **Beijing 100085 (CN)**

(74) Representative: **Studio Torta S.p.A.**
**Viale Antonio Silvani, 6**
**40122 Bologna (IT)**

(54) **CHANNEL STATE INFORMATION SENDING METHOD AND APPARATUS, AND CHANNEL STATE INFORMATION RECEIVING METHOD AND APPARATUS**

(57) A method for transmitting channel state information, a method for receiving channel state information, and a device are provided according to the present disclosure, which relates to the field of communications technology. The method according to the present disclosure includes: transmitting, by a terminal, at least two of following pieces of information: first indication information for indicating a first object in a combination coefficient matrix of a transport layer; second indication information for indicating locations of non-zero coefficients in a second object or locations of non-zero coefficients in the combination coefficient matrix, where the second object is the first object or an object in the combination coefficient matrix other than the first object; or, third indication information for determining whether to ignore location indication of non-zero coefficients of the transport layer.

transmitting, by a terminal, at least two of following pieces of information:

first indication information, where the first indication information is configured to indicate a first object in a combination coefficient matrix of a transport layer;

second indication information, where the second indication information is configured to indicate locations of non-zero coefficients in a second object, or locations of non-zero coefficients in the combination coefficient matrix, where the second object is the first object or an object in the combination coefficient matrix other than the first object; or,

third indication information, where the third indication information is configured to determine whether to ignore location indication of non-zero coefficients of the transport layer

~ 101

FIG. 1

**Description**

**CROSS-REFERENCE TO RELATED APPLICATION**

This application claims a priority to Chinese Patent Application No. 202110690582.0, filed in China on June 22, 2021, which is incorporated in its entirety by reference herein.

**TECHNICAL FIELD**

The present disclosure relates to the field of communications technology, in particular to a method for transmitting channel state information, a method for receiving channel state information, and a device.

**BACKGROUND**

Currently, in order for a network side to calculate high-precision precoding for data transmission, a terminal is required to report non-zero coefficients and location indication of the non-zero coefficients. The non-zero coefficients and location indication information of the non-zero coefficients are carried in channel state information (Channel State Information, CSI) for reporting, where the channel state information is reported by the terminal and includes two parts.

In a conventional CSI, locations of non-zero coefficients of each transport layer that are reported are indicated by a bitmap with a size of $K_1 \times M_v$, where $K_1$ is a quantity of rows of a combination coefficient matrix, and $M_v$ is a quantity of columns of the combination coefficient matrix. However, it is possible that these non-zero coefficients may be located only in some columns of the $M_v$ columns (or some rows of the $K_1$ rows). In this case, some unnecessary overhead may be caused by the feeding back if the bitmap of $K_1 \times M_v$ is still used to indicate the non-zero coefficients.

**SUMMARY**

An object of the present disclosure is to provide a method for transmitting channel state information, a method for receiving channel state information, and a device, to solve a problem that unnecessary overhead is caused for transmission of channel state information.

In order to achieve the above object, embodiments of the present disclosure provide a method for transmitting channel state information, including:

transmitting, by a terminal, at least two of following pieces of information:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.

Optionally, the first indication information includes N1 pieces of first information, N1 is an integer greater than or equal to 1 and less than or equal to L, and L is a quantity of layers of the transport layer.

Optionally, in a case that a quantity of columns of the combination coefficient matrix is 2, a size of the first information is 1 bit.

Optionally, a size of the first information is determined by a size in a first dimension of the combination coefficient matrix;

in a case that the first object is the column with all zero coefficients in the combination coefficient matrix or the first object is the column with non-zero coefficients in the combination coefficient matrix, the first dimension is column; and
in a case that the first object is the row with all zero coefficients in the combination coefficient matrix or the first object is the row with non-zero coefficients in the combination coefficient matrix, the first dimension is row.

Optionally, the size of the first information is equal to the size in the first dimension; or,

the size of the first information is $\max_{Y_i}\left\{\left\lceil\log_2\binom{X}{Y_i}\right\rceil\right\}+\lceil\log_2(X)\rceil$ , $1 \le Y_i \le X$; where X is the size in the first

dimension, $Y_i$ is an i-th number selected from X, $\max_{Y_i}\left\{\left\lceil\log_2\binom{X}{Y_i}\right\rceil\right\}$ represents a maximum quantity of bits required by the first information in a case of selecting different $Y_i$ from X.

Optionally, the second indication information includes N2 pieces of second information, N2 is an integer greater than or equal to 1 and less than or equal to L, and L is a quantity of layers of the transport layer.

Optionally, a size of the second information is determined by a size in a second dimension of the combination coefficient matrix, and a quantity of columns or rows of the first obj ect; or,

a size of the second information is determined by a size in a first dimension of the combination coefficient matrix, a size in a second dimension of the combination coefficient matrix, and a quantity of columns or rows of the first object; the second dimension of the combination coefficient matrix and the first dimension of the combination coefficient matrix are different dimensions of the combination coefficient matrix.

Optionally, in a case that the size of the second information is determined by the size in the second dimension of the combination coefficient matrix, and the quantity of columns or rows of the first object,

the size of the second information is ZY or $\left\lceil\log_2\binom{ZY}{K'}\right\rceil$ ; where Z is the size in the second dimension, Y is the quantity of columns or rows of the first object, and K' is a quantity of non-zero coefficients in the combination coefficient matrix.

Optionally, in a case that the size of the second information is determined by the size in the first dimension of the combination coefficient matrix, the size in the second dimension of the combination coefficient matrix, and the quantity of columns or rows of the first object,

the size of the second information is Z(X - Y) or $\left\lceil\log_2\binom{Z(X-Y)}{K'}\right\rceil$ ; where X is the size in the first dimension, Y is the quantity of columns or rows of the first object, Z is the size in the second dimension, and K' is a quantity of non-zero coefficients in the combination coefficient matrix.

Optionally, in a case that the terminal transmits the first indication information, the first indication information is carried in a first part of the channel state information;

in a case that the terminal transmits the second indication information, the second indication information is carried in a second part of the channel state information;
in a case that the terminal transmits the third indication information, the third indication information is carried in the first part of the channel state information.

Optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

Optionally, a size of the third information is $\lceil\log_2(\beta ZX)\rceil$ , where X is a size in a first dimension of the combination coefficient matrix, Z is a size in a second dimension of the combination coefficient matrix, and $\beta$ is a second parameter.

Optionally, a size of the fourth information is $\lceil\log_2(P)\rceil$ bits, where P is a preset maximum quantity of non-zero coefficients allowed to be reported by all layers.

Optionally, a size of the fifth information is 1*N3 bits, where N3 is an integer greater than or equal to 1 and less than or equal to L, and L is a quantity of layers of the transport layer.

Optionally, the method further includes:

determining whether to transmit at least two of the first indication information, the second indication information, or the third indication information based on configuration information of a network side device;
where the configuration information includes at least one of following:

a quantity of ports of the terminal;
a quantity of frequency-domain basis vectors; or,
a first parameter.

In order to achieve the above object, embodiments of the present disclosure further provide a method for receiving channel state information, including:
receiving, by a network side device, at least two of following pieces of information transmitted by a terminal:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.

Optionally, after the receiving, by the network side device, at least two of the first indication information, the second indication information, or the third indication information transmitted by the terminal, the method further includes:
determining, by the network side device, locations of non-zero coefficients in the combination coefficient matrix based on at least two of the first indication information, the second indication information, or the third indication information.

Optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

In order to achieve the above object, embodiments of the present disclosure also provide a device for transmitting channel state information, including: a memory, a transceiver, and a processor;
where the memory is configured to store program instructions; the processor is configured to read the program instructions in the memory; the transceiver is configured to send and receive data under control of the processor and perform following operations:
transmitting at least two of following pieces of information:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.

Optionally, the first indication information includes N1 pieces of first information, N1 is an integer greater than or equal to 1 and less than or equal to L, and L is a quantity of layers of the transport layer.

Optionally, in a case that a quantity of columns of the combination coefficient matrix is 2, a size of the first information is 1 bit.

Optionally, a size of the first information is determined by a size in a first dimension of the combination coefficient matrix;

in a case that the first object is the column with all zero coefficients in the combination coefficient matrix or the first object is the column with non-zero coefficients in the combination coefficient matrix, the first dimension is column; and in a case that the first object is the row with all zero coefficients in the combination coefficient matrix or the first object is the row with non-zero coefficients in the combination coefficient matrix, the first dimension is row.

Optionally, the size of the first information is equal to the size in the first dimension; or,

the size of the first information is $\max_{Y_i}\left\{\left\lceil\log_2\binom{X}{Y_i}\right\rceil\right\}+\lceil\log_2(X)\rceil$ , $1 \leq Y_i \leq X$; where X is the size in the first dimension, $Y_i$ is an i-th number selected from X, $\max_{Y_i}\left\{\left\lceil\log_2\binom{X}{Y_i}\right\rceil\right\}$ represents a maximum quantity of bits required by the first information in a case of selecting different $Y_i$ from X.

Optionally, the second indication information includes N2 pieces of second information, N2 is an integer greater than or equal to 1 and less than or equal to L, and L is a quantity of layers of the transport layer.

Optionally, a size of the second information is determined by a size in a second dimension of the combination coefficient matrix, and a quantity of columns or rows of the first object; or,

a size of the second information is determined by a size in a first dimension of the combination coefficient matrix, a size in a second dimension of the combination coefficient matrix, and a quantity of columns or rows of the first object; the second dimension of the combination coefficient matrix and the first dimension of the combination coefficient matrix are different dimensions of the combination coefficient matrix.

Optionally, in a case that the size of the second information is determined by the size in the second dimension of the combination coefficient matrix, and the quantity of columns or rows of the first object,

the size of the second information is ZY or $\left\lceil\log_2\binom{ZY}{K'}\right\rceil$ ; where Z is the size in the second dimension, Y is the quantity of columns or rows of the first object, and K' is a quantity of non-zero coefficients in the combination coefficient matrix.

Optionally, in a case that the size of the second information is determined by the size in the first dimension of the combination coefficient matrix, the size in the second dimension of the combination coefficient matrix, and the quantity of columns or rows of the first object,

the size of the second information is $Z(X - Y)$ or $\left\lceil\log_2\binom{Z(X-Y)}{K'}\right\rceil$ ; where X is the size in the first dimension, Y is the quantity of columns or rows of the first object, Z is the size in the second dimension, and K' is a quantity of non-zero coefficients in the combination coefficient matrix.

Optionally, in a case that the first indication information is transmitted, the first indication information is carried in a first part of the channel state information;

in a case that the second indication information is transmitted, the second indication information is carried in a second part of the channel state information; in a case that the third indication information is transmitted, the third indication information is carried in the first part of the channel state information.

Optionally, the third indication information includes at least one of following pieces of information:

third information, where the third information is configured to indicate a quantity of non-zero coefficients of each transport layer; fourth information, where the fourth information is configured to indicate a quantity of non-zero coefficients of all transport layers; or,

fifth information, where the fifth information is configured to indicate whether to ignore location indication of non-zero coefficients of the combination coefficient matrix of the transport layer.

Optionally, a size of the third information is $\lceil \log_2(\beta ZX) \rceil$, where X is a size in a first dimension of the combination coefficient matrix, Z is a size in a second dimension of the combination coefficient matrix, and $\beta$ is a second parameter.

Optionally, a size of the fourth information is $\lceil \log_2(P) \rceil$ bits, where P is a preset maximum quantity of non-zero coefficients allowed to be reported by all layers.

Optionally, a size of the fifth information is 1*N3 bits, where N3 is an integer greater than or equal to 1 and less than or equal to L, and L is a quantity of layers of the transport layer.

Optionally, the processor is configured to perform following operations:

determining whether to transmit at least two of the first indication information, the second indication information, or the third indication information based on configuration information of a network side device;
the configuration information includes at least one of following:

a quantity of ports of the terminal;
a quantity of frequency-domain basis vectors; or,
a first parameter.

In order to achieve the above object, embodiments of the present disclosure further provide a device for transmitting channel state information, including:
a transmitting module, configured to transmit at least two of following pieces of information:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.

Optionally, the first indication information includes N1 pieces of first information, N1 is an integer greater than or equal to 1 and less than or equal to L, and L is a quantity of layers of the transport layer.

Optionally, in a case that a quantity of columns of the combination coefficient matrix is 2, a size of the first information is 1 bit.

Optionally, a size of the first information is determined by a size in a first dimension of the combination coefficient matrix;

in a case that the first object is the column with all zero coefficients in the combination coefficient matrix or the first object is the column with non-zero coefficients in the combination coefficient matrix, the first dimension is column; and
in a case that the first object is the row with all zero coefficients in the combination coefficient matrix or the first object is the row with non-zero coefficients in the combination coefficient matrix, the first dimension is row.

Optionally, the size of the first information is equal to the size in the first dimension; or,

the size of the first information is $\max_{Y_i}\left\{\left\lceil \log_2\binom{X}{Y_i}\right\rceil\right\} + \lceil \log_2(X) \rceil$, $1 \le Y_i \le X$; where X is the size in the first dimension, $Y_i$ is an i-th number selected from X, $\max_{Y_i}\left\{\left\lceil \log_2\binom{X}{Y_i}\right\rceil\right\}$ represents a maximum quantity of bits required by the first information in a case of selecting different $Y_i$ from X.

Optionally, the second indication information includes N2 pieces of second information, N2 is an integer greater than or equal to 1 and less than or equal to L, and L is a quantity of layers of the transport layer.

Optionally, a size of the second information is determined by a size in a second dimension of the combination coefficient matrix, and a quantity of columns or rows of the first obj ect; or,

> a size of the second information is determined by a size in a first dimension of the combination coefficient matrix, a size in a second dimension of the combination coefficient matrix, and a quantity of columns or rows of the first object; the second dimension of the combination coefficient matrix and the first dimension of the combination coefficient matrix are different dimensions of the combination coefficient matrix.

Optionally, in a case that the size of the second information is determined by the size in the second dimension of the combination coefficient matrix, and the quantity of columns or rows of the first object,

the size of the second information is ZY or $\left\lceil \log_2 \binom{ZY}{K'} \right\rceil$; where Z is the size in the second dimension, Y is the quantity of columns or rows of the first object, and K' is a quantity of non-zero coefficients in the combination coefficient matrix.

Optionally, in a case that the size of the second information is determined by the size in the first dimension of the combination coefficient matrix, the size in the second dimension of the combination coefficient matrix, and the quantity of columns or rows of the first object,

the size of the second information is $Z(X$ - $Y)$ or $\left\lceil \log_2 \binom{Z(X-Y)}{K'} \right\rceil$; where X is the size in the first dimension, Y is the quantity of columns or rows of the first object, Z is the size in the second dimension, and K' is a quantity of non-zero coefficients in the combination coefficient matrix.

Optionally, in a case that the first indication information is transmitted, the first indication information is carried in a first part of the channel state information;

> in a case that the second indication information is transmitted, the second indication information is carried in a second part of the channel state information;
> in a case that the third indication information is transmitted, the third indication information is carried in the first part of the channel state information.

Optionally, the third indication information includes at least one of following pieces of information:

> third information, where the third information is configured to indicate a quantity of non-zero coefficients of each transport layer;
> fourth information, where the fourth information is configured to indicate a quantity of non-zero coefficients of all transport layers; or,
> fifth information, where the fifth information is configured to indicate whether to ignore location indication of non-zero coefficients of the combination coefficient matrix of the transport layer.

Optionally, a size of the third information is $\left\lceil \log_2(\beta ZX) \right\rceil$, where X is a size in a first dimension of the combination coefficient matrix, Z is a size in a second dimension of the combination coefficient matrix, and $\beta$ is a second parameter.

Optionally, a size of the fourth information is $\left\lceil \log_2(P) \right\rceil$ bits, where P is a preset maximum quantity of non-zero coefficients allowed to be reported by all layers.

Optionally, a size of the fifth information is 1*N3 bits, where N3 is an integer greater than or equal to 1 and less than or equal to L, and L is a quantity of layers of the transport layer.

Optionally, the device further includes:

> a first determining module, configured to determine whether to transmit at least two of the first indication information, the second indication information, or the third indication information based on configuration information of a network side device;

where the configuration information includes at least one of following:

a quantity of ports of the terminal;
a quantity of frequency-domain basis vectors; or,
a first parameter.

In order to achieve the above object, embodiments of the present disclosure further provide a device for receiving channel state information, including: a memory, a transceiver, a processor;
where the memory is configured to store program instructions; the processor is configured to read the program instructions in the memory; the transceiver is configured to send and receive data under control of the processor and perform following operations:
receiving at least two of following pieces of information transmitted by a terminal:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.

Optionally, the processor is configured to perform following operations:
determining locations of non-zero coefficients in the combination coefficient matrix based on at least two of the first indication information, the second indication information, or the third indication information.

Optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

In order to realize the above object, embodiments of the present disclosure also provide a device for receiving channel state information, including:
a receiving module, configured to receive at least two of following pieces of information transmitted by a terminal:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.

Optionally, the device includes:
a second determining module, configured to determine locations of non-zero coefficients in the combination coefficient matrix based on at least two of the first indication information, the second indication information, or the third indication information.

Optionally, the third indication information includes at least one of following pieces of information:

third information, where the third information is configured to indicate a quantity of non-zero coefficients of each transport layer;

fourth information, where the fourth information is configured to indicate a quantity of non-zero coefficients of all transport layers; or,

fifth information, where the fifth information is configured to indicate whether to ignore location indication of non-zero coefficients of the combination coefficient matrix of the transport layer.

In order to achieve the above object, embodiments of the present disclosure further provide a processor readable storage medium, the processor readable storage medium having a computer program stored thereon, and the computer program is used to cause the processor to perform the method for transmitting the channel state information as described above, or, the method for receiving the channel state information as described above.

The above technical solutions of the present disclosure have at least the following beneficial effects.

In the above technical solutions of the embodiments of the present disclosure, the terminal reduces unnecessary overhead by reporting at least two of the first indication information, the second indication information, and the third indication information based on requirements of scenarios.

## BRIEF DESCRIPTION OF THE DRAWINGS

To better clarify technical solutions of embodiments of the present disclosure, drawings used in descriptions of the embodiments are briefly introduced hereinafter. Apparently, the described drawings merely illustrate some embodiments of the present disclosure. A person ordinary skilled in the art can obtain other drawings based on these drawings without any creative efforts.

FIG. 1 is a flow diagram of a method performed by a terminal according to embodiments of the present disclosure;

FIG. 2 is a first schematic diagram of non-zero coefficients in a two-layer combination coefficient matrix;

FIG. 3 is a second schematic diagram of non-zero coefficients in a two-layer combination coefficient matrix;

FIG. 4 is a third schematic diagram of non-zero coefficients in a two-layer combination coefficient matrix;

FIG. 5 is a flow diagram of a method performed by a network side device according to embodiments of the present disclosure;

FIG. 6 is a first structural block diagram of a device according to embodiments of the present disclosure;

FIG. 7 is a first schematic diagram of modules of a device according to embodiments of the present disclosure;

FIG. 8 is a second structural block diagram of a device according to embodiments of the present disclosure; and

FIG. 9 is a second schematic diagram of modules of a device according to embodiments of the present disclosure.

## DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of the character and behind the character.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

Embodiments of the present disclosure provide a method for transmitting channel state information, a method for receiving channel state information, and a device, where the method and the device are based on the same application concept. Since the principles of solving problems in the method and the device are similar, reference may be made to each other for implementations of the device and the method, the repetition of which is not provided again herein.

It is to be noted that in embodiments of the present disclosure, port selection codebook structure is $W = W_1 W_2 W_f^H$, where $W_1$ is a port selection matrix, $W_f$ is a frequency-domain basis vector matrix based on discrete Fourier transform (Discrete Fourier Transform, DFT), and $W_2$ is a combination coefficient matrix of the codebook. The network side device calculates a precoding matrix indicator (Precoding Matrix Indicator, PMI) for a corresponding user based on the codebook structure, which at least requires the terminal to feed back non-zero coefficients in $W_2$ and/or locations of the corresponding non-zero coefficients.

The quantity of rows $K_1$ of the combination coefficient matrix $W_2$ indicates the quantity of ports selected by the terminal, and the quantity of columns $M_v$ indicates the quantity of frequency-domain basis vectors. For a certain transport layer, the network side device configures a preset parameter $\beta$ for the terminal to control the maximum quantity of non-zero coefficients that are to be fed back by the terminal to be $\lceil \beta K_1 M_v \rceil$, where $\lceil \cdot \rceil$ denotes an operation of rounding up. Optionally, $K_1$ of different transport layers may be the same or different, and $M_v$ of different transport layers may be the same or different.

In the embodiments, the combination coefficient matrix is corresponding coefficients of multiple beams which are precoded through a linear combination calculation. It is named herein as the combination coefficient matrix only to better illustrate the coefficients corresponding to the multiple beams, and other designations are within the scope of protection of the present disclosure.

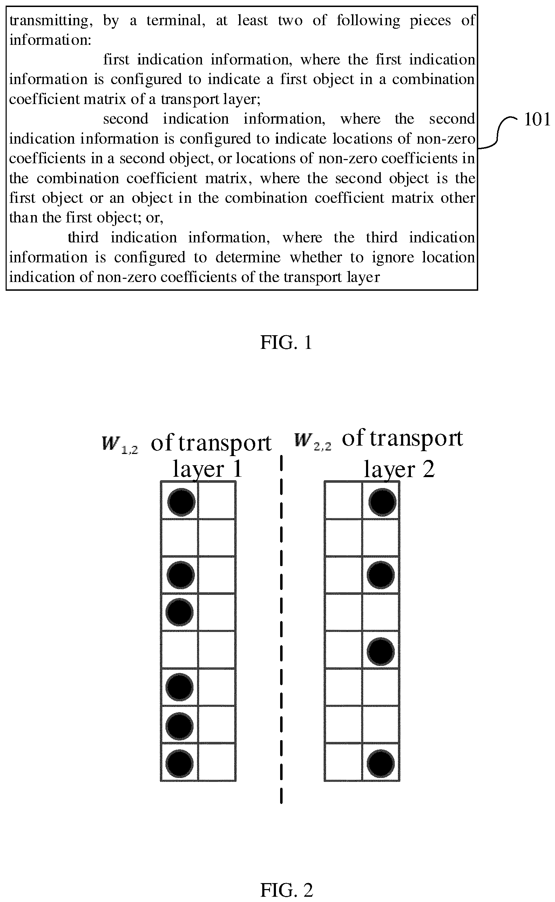

As shown in FIG. 1, embodiments of the present disclosure provide a method for transmitting channel state information, including:

Step 101, transmitting, by a terminal, at least two of following pieces of information:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

In this way, at least two of the first indication information, the second indication information and the third indication information are reported by the terminal based on requirements of scenarios. As a result, reporting of only location indication of non-zero coefficients of a combination coefficient matrix of a specific transport layer or location indication of non-zero coefficients of a specific object of the combination coefficient matrix of the transport layer, etc., can be realized, which avoids reporting a bitmap of $K_1 \times M_v$ for each transport layer to indicate non-zero coefficients and reduces unnecessary overhead.

For example, the terminal may transmit the first indication information and the third indication information, the terminal may transmit the first indication information and the second indication information, the terminal may transmit the second indication information and the third indication information, or the terminal may transmit the first indication information, the second indication information and the third indication information.

Optionally, in a case that the first object is a column or row with all zero coefficients, the second object is the object in the combination coefficient matrix other than the first object; and

in a case that the first object is a column or row with non-zero coefficients, the second object is the first object.

A column or row with one or more non-zero coefficients means that at least one of coefficients in the column or row is non-zero.

For example,

$$W_2 = \begin{bmatrix} 0 & 0 & 1 \\ 1 & 0 & 1 \\ 1 & 0 & 0 \\ 0 & 0 & 0 \\ 0 & 0 & 1 \end{bmatrix}$$

, and $W_2$ is a matrix of 3 columns (C1, C2, C3) and 5 rows (R1, R2, R3, R4, R5). In a case that the first object is a column with all zero coefficients in this combination coefficient matrix, the first object is C2. In a case that the first object is a row with all zero coefficients in this combination coefficient matrix, the first object is R4. In a case that the first object is a column with non-zero coefficients in this combination coefficient matrix, the first object is C1 and C3. In a case that the first object is a row with non-zero coefficients in this combination coefficient matrix, the first object is R1, R2, R3 and R5.

For the second object: optionally, in a case that the first object is a column or row with all zero coefficients, the second object is the object in the combination coefficient matrix other than the first object; and

in a case that the first object is a column or row with non-zero coefficients, the second object is the first object.

That is, when the first object is a column with all zero coefficients in the combination coefficient matrix, the second object is a column with non-zero coefficients in the combination coefficient matrix; and when the first object is a row with all zero coefficients in the combination coefficient matrix, the second object is a row with non-zero coefficients in the combination coefficient matrix. When the first object is a column with non-zero coefficients in the combination coefficient matrix, the second object is also the column with non-zero coefficients in the combination coefficient matrix; and when the first object is a row with non-zero coefficients in the combination coefficient matrix, the second object is also the row with non-zero coefficients in the combination coefficient matrix.

For example, for $W_2$ of 3 columns (C1, C2, C3) and 5 rows (R1, R2, R3, R4, R5) in the above example, in a case that the first object is C2, the second object is C1 and C3; in a case that the first object is R4, the second object is R1, R2, R3 and R5; in a case that the first object is C1 and C3, the second object is also C1 and C3; and in a case that the first object is R1, R2, R3 and R5, the second object is also R1, R2, R3 and R5.

In addition, for L transport layers, L being an integer greater than or equal to 1: in the embodiments, optionally, the first indication information includes N1 pieces of first information, N1 is an integer greater than or equal to 1 and less than or equal to L, and L is a quantity of layers of the transport layer.

The relationship between the first indication information and the N1 pieces of first information is analogous to the relationship between a set and elements, and the first indication information indicates the first object in the combination coefficient matrix of the transport layer through the N1 pieces of first information. When N1=L, the L pieces of first information correspond to the L transport layers in a one-to-one correspondence. When N1 is less than L, there may be a situation where first information for a specific transport layer is not indicated, or there may be a situation where same first information applies to different transport layers, etc.

Optionally, in the embodiments, in a case that a quantity of columns of the combination coefficient matrix is 2, a size of the first information is 1 bit.

That is, if $M_v$=2, the size of the corresponding first information may be 1 bit. That is, the size of the first information is $\lceil \log_2(M_v) \rceil$ bits, but only if $M_v = 2$.

Further, optionally, in the embodiments, a size of the first information is determined by a size in a first dimension of the combination coefficient matrix;

> in a case that the first object is the column with all zero coefficients in the combination coefficient matrix or the first object is the column with non-zero coefficients in the combination coefficient matrix, the first dimension is column; and
> in a case that the first object is the row with all zero coefficients in the combination coefficient matrix or the first object is the row with non-zero coefficients in the combination coefficient matrix, the first dimension is row.

That is, in a case that the first object is a column with all zero coefficients in the combination coefficient matrix, or, the first object is a column with non-zero coefficients in the combination coefficient matrix, the size of the first information is determined by $M_v$. In a case that the first object is a row with all zero coefficients in the combination coefficient matrix, or, the first object is a row with non-zero coefficients in the combination coefficient matrix, the size of the first information is determined by $K_1$.

It should be understood that the combination coefficient matrix in the embodiments has two dimensions, i.e., a first dimension and a second dimension. When the first dimension is column, the corresponding second dimension is row; when the first dimension is row, the corresponding second dimension a column.

In the embodiments, for determining the size of the first information based on the size in the first dimension of the combination coefficient matrix: optionally, the size of the first information is equal to the size in the first dimension; or,

the size of the first information is $\max_{Y_i}\left\{\left\lceil \log_2\binom{X}{Y_i} \right\rceil\right\} + \lceil \log_2(X) \rceil$, $1 \le Y_i \le X$; where X is the size in the first dimension, $Y_i$ is an i-th number selected from X, $\max_{Y_i}\left\{\left\lceil \log_2\binom{X}{Y_i} \right\rceil\right\}$ represents a maximum quantity of bits required by the first information in a case of selecting different $Y_i$ from X. $\max_{Y_i}\left\{\left\lceil \log_2\binom{X}{Y_i} \right\rceil\right\}$ is a maximum quantity of bits that is selected after substituting $Y_i = 1, \cdots, X$ sequentially into $\left\lceil \log_2\binom{X}{Y_i} \right\rceil$ to calculate

$$\left\lceil \log_2 \binom{X}{1} \right\rceil, \ \cdots, \ \left\lceil \log_2 \binom{X}{X} \right\rceil . \ \left\lceil \log_2 \binom{X}{Y_i} \right\rceil \text{ represents the quantity of bits required in a case of selecting}$$

$Y_i$ from X. For example, if X=5, 1-5 are substituted sequentially into $\left\lceil \log_2 \binom{X}{Y_i} \right\rceil$, which yields

$$\left\lceil \log_2 \binom{5}{1} \right\rceil = \lceil \log_2 5 \rceil = 3$$
,

$$\left\lceil \log_2 \binom{5}{2} \right\rceil = \lceil \log_2 10 \rceil = 4, \ \left\lceil \log_2 \binom{5}{3} \right\rceil = \lceil \log_2 10 \rceil = 4, \ \left\lceil \log_2 \binom{5}{4} \right\rceil = \lceil \log_2 5 \rceil = 3, \ \left\lceil \log_2 \binom{5}{5} \right\rceil = \lceil \log_2 1 \rceil = 1$$

, so $\max_{Y_i} \left\{ \left\lceil \log_2 \binom{X}{Y_i} \right\rceil \right\} = 4$. As $\lceil \log_2(X) \rceil = 3$, the size of the first information is 7 bits.

In this way, on one hand, for the case where the first object is a column with all zero coefficients in the combination coefficient matrix or the first object is a column with non-zero coefficients in the combination coefficient matrix, the size of the first information is $M_v$; for the case where the first object is a row with all zero coefficients in the combination coefficient matrix or the first object is a row with non-zero coefficients in the combination coefficient matrix, the size of the first information is $K_1$.

On the other hand, for the case where the first object is a column with all zero coefficients in the combination coefficient matrix or the first object is a column with non-zero coefficients in the combination coefficient matrix, the size of the first information is $\max_{Y_i} \left\{ \left\lceil \log_2 \binom{X}{Y_i} \right\rceil \right\} + \lceil \log_2(X) \rceil = \max_{C_i} \left\{ \left\lceil \log_2 \binom{M_v}{C_i} \right\rceil \right\} + \lceil \log_2(M_v) \rceil$, where $C_i = 1, \cdots, M_v$; for the case where the first object is a row with all zero coefficients in the combination coefficient matrix or the first object is a row with non-zero coefficients in the combination coefficient matrix, the size of the first information is $\max_{Y_i} \left\{ \left\lceil \log_2 \binom{X}{Y_i} \right\rceil \right\} + \lceil \log_2(X) \rceil = \max_{R_i} \left\{ \left\lceil \log_2 \binom{K_1}{R_i} \right\rceil \right\} + \lceil \log_2(K_1) \rceil$, where $R_i = 1, \cdots, K_1$.

Further, similar to the first indication information: optionally, in the embodiments, the second indication information includes N2 pieces of second information, N2 is an integer greater than or equal to 1 and less than or equal to L, and L is a quantity of layers of the transport layer.

The relationship between the second indication information and the N2 pieces of second information is analogous to the relationship between a set and elements, and the second indication information indicates locations of non-zero coefficients in the second object or locations of non-zero coefficients in the combination coefficient matrix, through the N2 pieces of second information. When N2 =L, the L pieces of second information correspond to the L transport layers in a one-to-one correspondence. When N2 is less than L, there may be a situation where second information for a specific transport layer is not indicated, or there may be a situation where same second information applies to different transport layers, etc.

Optionally, in the embodiments, a size of the second information is determined by a size in a second dimension of the combination coefficient matrix, and a quantity of columns or rows of the first object; or,

a size of the second information is determined by a size in a first dimension of the combination coefficient matrix, a size in a second dimension of the combination coefficient matrix, and a quantity of columns or rows of the first object; the second dimension of the combination coefficient matrix and the first dimension of the combination coefficient matrix are different dimensions of the combination coefficient matrix.

It is known from the above that, when the first dimension is column, the second dimension is row; and when the first dimension is row, the second dimension is column.

In this way, when the size of the second information is determined by the size in the second dimension of the combination coefficient matrix, and the quantity of columns or rows of the first object: for the case where the first object is a column with all zero coefficients in the combination coefficient matrix or the first object is a column with non-zero coefficients in the combination coefficient matrix, the size of the second information is determined by $K_1$ and C, where C is the quantity of columns of the first object; for the case where the first object is a row with all zero coefficients in the combination coefficient matrix or the first object is a row with non-zero coefficients in the combination coefficient matrix, the size of the second information is determined by $M_v$ and R, where R is the quantity of rows of the first object.

When the size of the second information is determined by the size in the first dimension of the combination coefficient matrix, the size in the second dimension of the combination coefficient matrix, and the quantity of columns or rows of the first object: for the case where the first object is a column with all zero coefficients in the combination coefficient matrix or the first object is a column with non-zero coefficients in the combination coefficient matrix, the size of the second information may be determined by $M_v$, $K_1$, and C; for the case where the first object is a row with all zero coefficients in the combination coefficient matrix or the first object is a row with non-zero coefficients in the combination coefficient matrix, the size of the second information may be determined by $M_v$, $K_1$ and R.

Optionally, in a case that the size of the second information is determined by the size in the second dimension of the combination coefficient matrix, and the quantity of columns or rows of the first object,

the size of the second information is ZY or $\left\lceil \log_2 \binom{ZY}{K'} \right\rceil$ ; where Z is the size in the second dimension, Y is the quantity of columns or rows of the first object, and K' is a quantity of non-zero coefficients in the combination coefficient matrix.

Similarly to $\left\lceil \log_2 \binom{X}{Y_i} \right\rceil$, $\left\lceil \log_2 \binom{ZY}{K'} \right\rceil$ herein represents the quantity of bits required in a case of selecting K' from ZY.

Therefore, when the size of the second information is determined by $K_1$ and C, the size of the second information is equal to $K_1 C$ or $\left\lceil \log_2 \binom{K_1 C}{K'} \right\rceil$ . When the size of the second information is determined by $M_v$ and R, the size of the second information is equal to $M_v R$ or $\left\lceil \log_2 \binom{M_v R}{K'} \right\rceil$ .

Optionally, in a case that the size of the second information is determined by the size in the first dimension of the combination coefficient matrix, the size in the second dimension of the combination coefficient matrix, and the quantity of columns or rows of the first object,

the size of the second information is $Z(X - Y)$ or $\left\lceil \log_2 \binom{Z(X-Y)}{K'} \right\rceil$ ; where X is the size in the first dimension, Y is the quantity of columns or rows of the first object, Z is the size in the second dimension, and K' is a quantity of non-zero coefficients in the combination coefficient matrix.

Similarly to $\left\lceil \log_2 \binom{X}{Y_i} \right\rceil$, $\left\lceil \log_2 \binom{Z(X-Y)}{K'} \right\rceil$ herein represents the quantity of bits required in a case of selecting K' from $Z(X - Y)$.

That is, when the size of the second information is determined by $M_v$, $K_1$ and C, the size of the second information is equal to $K_1(M_v - C)$ or $\left\lceil \log_2 \binom{K_1(M_v - C)}{K'} \right\rceil$ . When the size of the second information is determined by $M_v$, $K_1$ and R, the size of the second information is equal to $M_v(K_1 - R)$ or $\left\lceil \log_2 \binom{M_v(K_1 - R)}{K'} \right\rceil$ .

In a case that the second information with a size of $\left\lceil \log_2 \binom{ZY}{K'} \right\rceil$ or $\left\lceil \log_2 \binom{Z(X-Y)}{K'} \right\rceil$ is used for indication, auxiliary information for indicating a quantity ($K_1$) of non-zero coefficients of the corresponding combination coefficient matrix also needs to be transmitted, and the auxiliary information may have a size of $\left\lceil \log_2(K_1 M_v) \right\rceil$ .

Optionally, in the embodiments, in a case that the terminal transmits the first indication information, the first indication information is carried in a first part of the channel state information;

in a case that the terminal transmits the second indication information, the second indication information is carried in a second part of the channel state information;
in a case that the terminal transmits the third indication information, the third indication information is carried in the first part of the channel state information.

That is, the first indication information is placed in the first part (Part 1) of the CSI. The auxiliary information may also be reported in Part 1. The second indication information is placed in the second part (Part 2) of the CSI.

The third indication information is placed in Part 1 of the CSI. The terminal sends the third indication information, which enables the network side device to determine whether to ignore location indication of non-zero coefficients of the transport layer. The terminal itself may determine, based on the third indication information, transport layers whose location indication of non-zero coefficients is to be ignored, so as to obtain the first indication information and/or the second indication information that are to be transmitted, or even not to transmit the first indication information and the second indication information.

For the third indication information that may be used to determine whether to ignore location indication of the non-zero coefficients of the transport layer: optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

In a case that the third indication information includes the third information, the third indication information includes L pieces of third information corresponding to the L transport layers. In a case that the third indication information includes the fourth information, the third indication information includes a piece of fourth information. In a case that the third indication information includes the fifth information, the third indication information includes a piece of fifth information.

Optionally, a size of the third information is $\lceil \log_2(\beta ZX) \rceil$, where X is a size in a first dimension of the combination coefficient matrix, Z is a size in a second dimension of the combination coefficient matrix, and $\beta$ is a second parameter.

That is, for a current transport layer, its third information is determined by the quantity of rows and the quantity of columns of the combination coefficient matrix of the transport layer, and the second parameter. That is, a size of third information of a transport layer is $\lceil \log_2(\beta K_1 M_v) \rceil$, where $\beta$ may be determined based on information configured by the network side.

In this way, based on whether the quantity of non-zero coefficients of the transport layer is equal to $K_1 M_v$ or $K_1 C$ or $K_1(M_v - C)$, whether to omit the location indication of the non-zero coefficients of the corresponding transport layer may be determined.

In some scenarios, based on a quantity of non-zero coefficients of a transport layer, whether to ignore location indication of the non-zero coefficients of the transport layer may be determined independently; in some scenarios, it cannot be determined independently, and combination with the first information of the transport layer is need. Therefore, optionally, the terminal needs to send the third information and the first information. In this case, the first information and the third information are associated with the same transport layer. For example, the terminal sends L pieces of third information and L pieces of first information.

Optionally, a size of the fourth information is $\lceil \log_2(P) \rceil$ bits, where P is a preset maximum quantity of non-zero coefficients allowed to be reported by all layers.

The size of P may be configured by the network side device, or predefined by the system.

With the fourth information, whether to omit location indication of non-zero coefficients of all transport layers may be determined, based on whether the quantity of the non-zero coefficients of all transport layers is equal to $\sum_{l=1}^{L} K_{l,1} M_{l,v}$. $K_{l,1}$ represents the quantity of ports selected by the terminal for the $1$-th transport layer, and $M_{l,v}$ represents the quantity of frequency-domain basis vectors for the $1$-th transport layer.

Optionally, a size of the fifth information is 1*N3 bits, where N3 is an integer greater than or equal to 1 and less than or equal to L, and L is a quantity of layers of the transport layer.

It is assumed that N3=L, then a value of each bit of the fifth information may be used to indicate whether to ignore location indication of non-zero coefficients of a transport layer corresponding to that bit. For example, for 2 transport layers, "0" represents ignoring location indication of non-zero coefficients of the transport layer and " 1" represents not ignoring location indication of non-zero coefficients of the transport layer, in this case, when the fifth information is "01", it is known that location indication of non-zero coefficients of the 1st transport layer is ignored and location indication of non-zero coefficients of the 2nd transport layer is not ignored. Alternatively, N3=1, and the value of this bit is used to indicate whether to ignore all transport layers. In addition, the value of N3 may have other implementations, which are not listed herein.

The fifth information and the fourth information may be combined to determine whether to ignore location indication of non-zero coefficients of the transport layer, i.e., the terminal carries the fourth information and the fifth information in Part 1.

Optionally, in the embodiments, the method further includes:

determining whether to transmit at least two of the first indication information, the second indication information, or the third indication information based on configuration information of a network side device;
where the configuration information includes at least one of following:

a quantity of ports of the terminal;
a quantity of frequency-domain basis vectors; or,
a second parameter.

That is, the terminal may further determine whether to transmit at least two of the first indication information, the second indication information and the third indication information, based on the configuration information of the network side device. For example, based on the configuration information of the network side device, the first indication information, the second indication information and the third indication information may not be transmitted, or at least two of the first indication information, the second indication information and the third indication information may be transmitted.

The second parameter may be $\beta$. For the configuration information including one or more of $K_1$, $M_v$, and $\beta$, whether to transmit at least two of the first indication information, the second indication information, and the third indication information may be determined by system predefining. For example, $\beta$ = 1 and/or $M_v$ = 1 are predefined, the terminal transmits the third indication information, to report the quantity of non-zero coefficients of all transport layers.

Accordingly, the network side device determines whether to ignore location indication of non-zero coefficients of the transport layer based on the received third indication information.

Hereinafter, applications of the embodiments of the present disclosure are described in conjunction with specific scenarios.

A first scenario

The network side device configures the terminal (UE) with: a quantity of CSI-RS ports which is 16, $K_1$ = 8 selected ports, a quantity of basis vectors in the DFT frequency-domain basis vector matrix $\boldsymbol{W}_f$ which is $M_v$ = 2, a preset

parameter $\beta = \dfrac{1}{2}$ and a window including N=2 consecutive orthogonal DFT frequency-domain basis vectors, and a beamformed CSI-RS is transmitted to the UE through the 16 CSI-RS ports. It is assumed that the total quantity of non-zero coefficients of all layers (transport layers) fed back by the UE is $2\lceil \beta K_1 M_v \rceil = 16$ , the quantity of layers of the transport layers is L=2, and the same quantity of ports is selected for all layers, i.e., $K_{1,1} = K_{2,1}$ = 8.

The UE calculates the combination coefficient matrix $\boldsymbol{W}_{l,2}$, $l$ = 1,2 for the L layers based on the network configuration parameters and the beamformed CSI-RS as received. It is assumed that the quantities of non-zero coefficients for the two layers actually fed back by the UE are $K_1^{NZ} = 6$ (i.e., the quantity of non-zero coefficients in the combination

coefficient matrix $\boldsymbol{W}_{1,2}$ of the transport layer 1 is 6) and $K_2^{NZ} = 4$ (i.e., the quantity of non-zero coefficients in the combination coefficient matrix $\boldsymbol{W}_{2,2}$ of the transport layer 2 is 4), and distribution of non-zero coefficients in each layer is shown in FIG. 2. The black dot in the figure indicates that there is a non-zero coefficient in the location.

Two pieces of bitmap indication information with a size of $M_v$ (in this case, $M_v$ = 2) are reported in Part 1 to indicate that there are $C_l$, $l$ = 1,2 columns in the combination coefficient matrix $\boldsymbol{W}_{l,2}$ of the two layers including non-zero coefficients respectively. As shown in Table 1, the first indication information is "1001", including two pieces of first information: "10" and "01". 1 in the table indicates that the corresponding column in the combination coefficient matrix $W_{l,2}$ contains non-zero coefficients, and 0 indicates that the corresponding column in the combination coefficient matrix $W_{l,2}$ contains coefficients that are all zeros.

Table 1

| | | |
|---|---|---|
| bitmap indicating whether each column of the combination coefficient matrix of the first layer contains non-zero coefficients | 1 | 0 |
| bitmap indicating whether each column of the combination coefficient matrix of the second layer contains non-zero coefficients | 0 | 1 |

From FIG. 1, it can be seen that $C_1 = C_2 = 1$, where $C_1$ represents the quantity of columns with non-zero coefficients in $W_{1,2}$, and $C_2$ represents the quantity of columns with non-zero coefficients in $W_{2,2}$. Two pieces of bitmap indication information with a size of $K_{1,1}C_l$ (in this case, $K_{1,1}C_1 = 8 * 1 = 8$, $K_{2,1}C_2 = 8 * 1 = 8$) are reported in Part 2 to indicate locations of non-zero coefficients contained in corresponding columns in Part 1 for the two layers respectively. As shown in Table 2, the second indication information is "1011011110101001", which includes two pieces of second information: "10110111" and " 10101001". 1 in the table indicates that the coefficient in the location is a non-zero coefficient, and 0 indicates that the coefficient in the location is a zero coefficient, and the UE only reports non-zero coefficients.

Table 2

| | | | | | | | | |
|---|---|---|---|---|---|---|---|---|
| bitmap indicating locations of non-zero coefficients of the first layer | 1 | 0 | 1 | 1 | 0 | 1 | 1 | 1 |
| bitmap indicating locations of non-zero coefficients of the second layer | 1 | 0 | 1 | 0 | 1 | 0 | 0 | 1 |

Based on the bitmaps shown in Table 1 and Table 2 reported by the UE in Part 1 and Part 2, the network side device may determine the locations of the non-zero coefficients of each layer, and the total overhead for indication of the non-zero coefficients is $M_v * L + \sum_{l=1}^{L} K_{l,1}C_l =$ 20 bits. In a case that a bitmap with a size of $K_{l,1}M_v$ is adopted for each layer for indication, the total overhead is $\sum_{l=1}^{L} K_{l,1}M_v = 32$ bits. Therefore, with the method according to the embodiments of the present disclosure, a reduction of 12 bits can be realized.

A second scenario

The network side device configures the UE with: a quantity of CSI-RS ports which is 16, $K_1 = 8$ selected ports, a quantity of basis vectors in the DFT frequency-domain basis vector matrix $W_f$ which is $M_v = 2$, a preset parameter $\beta = \frac{1}{2}$, and a window including N=2 consecutive orthogonal DFT frequency-domain basis vectors, and a beamformed CSI-RS is transmitted to the UE through the 16 CSI-RS ports. It is assumed that the total quantity of non-zero coefficients of all layers fed back by the UE is $2\lceil \beta K_1 M_v \rceil = 16$, the quantity of layers of the transport layers is L=2, and the same quantity of ports is selected for all layers, i.e., $K_{1,1} = K_{2,1} = 8$.

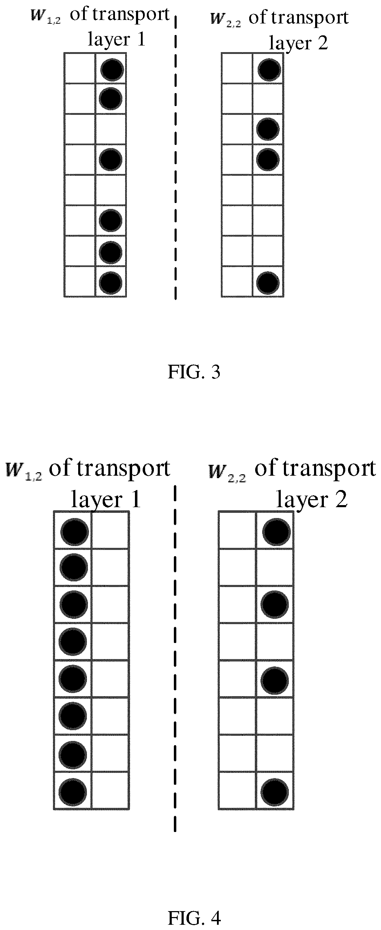

The UE calculates the combination coefficient matrix $W_{l,2}$, $l = 1,2$ for the L layers based on the network configuration parameters and the beamformed CSI-RS as received. It is assumed that the quantities of non-zero coefficients for the two layers actually fed back by the UE are $K_1^{NZ} = 6$ (i.e., the quantity of non-zero coefficients in the combination coefficient matrix $W_{1,2}$ of the transport layer 1 is 6) and $K_2^{NZ} = 4$ (i.e., the quantity of non-zero coefficients in the combination coefficient matrix $W_{2,2}$ of the transport layer 2 is 4), and distribution of non-zero coefficients in each layer is shown in FIG. 3. The black dot in the figure indicates that there is a non-zero coefficient in the location.

Two pieces of bitmap indication information with a size of $M_v$ (in this case, $M_v = 2$) are reported in Part 1 to indicate that there are $C_l$, $l$ = 1,2 columns in the combination coefficient matrix $\boldsymbol{W}_{l,2}$ of the two layers including non-zero coefficients respectively. As shown in Table 3, the first indication information is "01", including one piece of first information (applicable to both the transport layer 1 and the transport layer 2): "01". 1 in the table indicates that the corresponding column in the combination coefficient matrix $\boldsymbol{W}_{l,2}$ contains non-zero coefficients, and 0 indicates that the corresponding column in the combination coefficient matrix $\boldsymbol{W}_{l,2}$ contains coefficients that are all zeros.

Table 3

| 0 | 1 |
|---|---|

From FIG. 3, it can be seen that $C_1$ = $C_2$ = 1, where $C_1$ represents the quantity of columns with non-zero coefficients in $\boldsymbol{W}_{1,2}$, and $C_2$ represents the quantity of columns with non-zero coefficients in $\boldsymbol{W}_{2,2}$. Two pieces of bitmap indication information with a size of $K_{l,1}C_l$ (in this case, $K_{1,1}C_1$ = 8 * 1 = 8, $K_{2,1}C_2$ = 8 * 1 = 8) are reported in Part 2 to indicate locations of non-zero coefficients contained in corresponding columns in Part 1 for the two layers respectively. As shown in Table 4, the second indication information is "1101011110110001", which includes two pieces of second information: "11010111" and "10110001". 1 in the table indicates that the coefficient in the location is a non-zero coefficient, and 0 indicates that the coefficient in the location is a zero coefficient, and the UE only reports non-zero coefficients.

Table 4

| bitmap indicating locations of non-zero coefficients of the first layer | 1 | 1 | 0 | 1 | 0 | 1 | 1 | 1 |
|---|---|---|---|---|---|---|---|---|
| bitmap indicating locations of non-zero coefficients of the second layer | 1 | 0 | 1 | 1 | 0 | 0 | 0 | 1 |

Based on the bitmaps shown in Table 3 and Table 4 reported by the UE in Part 1 and Part 2, the network side device may determine the locations of the non-zero coefficients of each layer, and the total overhead for indication of the non-zero coefficients is $M_v + \sum_{l=1}^{L} K_{l,1} C_l =$ 18 bits. As can be seen from the first embodiment, in a case that a bitmap with a size of $K_{l,1}M_v$ is adopted for each layer for indication, the total overhead is 32 bits. Therefore, with the method according to the embodiments of the present disclosure, a reduction of 14 bits can be realized.

A third scenario

The network configuration and distribution of the calculated non-zero coefficients are the same as those in the first scenario. Two pieces of indication information with a size of $\lceil \log_2(M_v) \rceil = 1$ bit are reported in Part 1 to indicate that there are $C_l$, $l$ = 1,2 columns in the combination coefficient matrix $\boldsymbol{W}_{l,2}$ of the two layers including non-zero coefficients respectively. In a case that the value of the bit is 0, it means that $C_l$ = 1, otherwise $C_l$ = 2. Corresponding to distribution of non-zero coefficients in the various layers shown in FIG. 2, $C_1$ = $C_2$ = 1. In this case, the first indication information is "00", including two pieces of first information: "0" and "0". Reporting information in Part 2 to indicate locations of non-zero coefficients of the two layers is similar to that in the first scenario, which is not repeated herein. Compared with the method described in the first scenario, the information reported in this manner can save 1 bit for each layer. However, this manner is limited to $M_v$ = 2 only, and when $M_v$ > 2, the manner described in this scenario cannot be applied.

A fourth scenario

The network side device configures the terminal (UE) with: a quantity of CSI-RS ports which is 16, $K_1$ = 8 selected ports, a quantity of basis vectors in the DFT frequency-domain basis vector matrix $\boldsymbol{W}_f$ which is $M_v$ = 1, and a preset parameter $\beta$ = 1, and a beamformed CSI-RS is transmitted to the UE through the 16 CSI-RS ports. It is assumed that the quantity of layers of the transport layers is L=2, the total quantity of non-zero coefficients of all layers fed back by the UE is $2\lceil \beta K_1 M_v \rceil = 16$, and the same quantity of ports is selected for all layers, i.e., $K_{1,1}$ = $K_{2,1}$ = 8.

The UE calculates the combination coefficient matrix $\boldsymbol{W}_{l,2}$, $l$ = 1,2 for the L layers based on the network configuration parameters and the beamformed CSI-RS as received. It is assumed that the quantities of non-zero coefficients for the two layers actually fed back by the UE are $K_1^{NZ} = 8$ (i.e., the quantity of non-zero coefficients in the combination coefficient matrix $\boldsymbol{W}_{1,2}$ of the transport layer 1 is 8) and $K_2^{NZ} = 6$ (i.e., the quantity of non-zero coefficients in the combination coefficient matrix $W_{2,2}$ of the transport layer 2 is 6), and two pieces of bitmap indication information with a size of

$$\lceil \log_2(K_{l,1}M_v) \rceil = \lceil \log_2(8*1) \rceil = 3$$

bits are reported by the UE in Part 1 to indicate the quantity of reported non-zero coefficients of each layer. As $K_1^{NZ} = K_{1,1}M_v = 8$, i.e., all the coefficients of the transport layer 1 need to be reported, then the bitmap used to indicate the locations of the non-zero coefficients of this layer can be omitted and not reported. Since the quantity of non-zero coefficients reported for the transport layer 2 $K_2^{NZ} < K_{2,1}M_v$, the bitmap used to indicate the locations of non-zero coefficients of this layer cannot be omitted, i.e., a bitmap with a size of $K_{2,1}M_v = 8$ is reported in Part 2 to indicate the locations of non-zero coefficients. In this way, the second indication information reported in Part 2 includes only the second information corresponding to the transport layer 2. The network side device may determine whether to omit the bitmap used to indicate the locations of the non-zero coefficients of the corresponding layer based on the indication information (i.e., the third information) reported by the UE in Part 1 that is configured to indicate a quantity of non-zero coefficients of each layer, so as to determine the length of Part 2 to perform correct decoding. From the above, the total overhead for determining the quantity of non-zero coefficients of the two layers and locations of the non-zero coefficients is

$$\lceil \log_2(K_{l,1}M_v) \rceil * L + K_{2,1}M_v = \lceil \log_2(8*1) \rceil * 2 + 8*1 = 14$$

bits. In a case that a bitmap with a size of $K_{l,1}M_v$ is adopted for each layer for indication, i.e., information of $\lceil \log_2(2\lceil \beta K_1 M_v \rceil) \rceil = 4$ bits is reported in Part 1 to indicate the total quantity of non-zero coefficients in the two layers, and

$$\sum_{l=1}^{L} K_{l,1}M_v = K_{1,1}*1 + K_{2,1}*1 = 16$$

bits are reported in Part 2, then the total overhead is

$$\lceil \log_2(2\lceil \beta K_1 M_v \rceil) \rceil + \sum_{l=1}^{L} K_{l,1}M_v = 20$$

bits. It can be seen that, with the method according to the embodiments of the present disclosure, a reduction of 6 bits can be realized.

Optionally, it is assumed that the quantities of non-zero coefficients in the two layers actually fed back by the UE are $K_1^{NZ} = K_2^{NZ} = 8$ respectively, the UE reports $\lceil \log_2(2\lceil \beta K_1 M_v \rceil) \rceil = \lceil \log_2(2\lceil 1*8*1 \rceil) \rceil = 4$ bits in Part 1 to indicate the total quantity $\sum_{l=1}^{L} K_l^{NZ} = 16$ of non-zero coefficients in the two layers. Since $\sum_{l=1}^{L} K_l^{NZ} = \sum_{l=1}^{L} K_{l,1}M_v = 16$, i.e., all the coefficients of the two layers are reported, the bitmap used to indicate the locations of the non-zero coefficients of the two layers can be omitted. In a case that $\sum_{l=1}^{L} K_l^{NZ} < \sum_{l=1}^{L} K_{l,1}M_v$, a bitmap with a size of $K_{l,1}M_v$ needs to be reported for each layer to indicate non-zero coefficients of the corresponding layer.

A fifth scenario

The network side device configures the terminal (UE) with: a quantity of CSI-RS ports which is 16, $K_1 = 8$ selected ports, a quantity of basis vectors in the DFT frequency-domain basis vector matrix $W_f$ which is $M_v = 2$, a preset parameter $\beta = \frac{1}{2}$, and a window including N=2 consecutive orthogonal DFT frequency-domain basis vectors, and a beamformed CSI-RS is transmitted to the UE through the 16 CSI-RS ports. It is assumed that the total quantity of non-zero coefficients of all layers fed back by the UE is $2\lceil \beta K_1 M_v \rceil = 16$, the quantity of layers of the transport layers is L=2, and the same quantity of ports is selected for all layers, i.e., $K_{1,1} = K_{2,1} = 8$.

The UE calculates the combination coefficient matrix $W_{l,2}$, $l = 1,2$ for the L layers based on the network configuration parameters and the beamformed CSI-RS as received. It is assumed that the quantities of non-zero coefficients for the two layers actually fed back by the UE are $K_1^{NZ} = 8$ (i.e., the quantity of non-zero coefficients in the combination coefficient matrix $\boldsymbol{W}_{1,2}$ of the transport layer 1 is 8) and $K_2^{NZ} = 4$ (i.e., the quantity of non-zero coefficients in the combination coefficient matrix $\boldsymbol{W}_{2,2}$ of the transport layer 2 is 4), and distribution of non-zero coefficients in each layer is shown in FIG. 4. The black dot in the figure indicates that there is a non-zero coefficient in the location.

Two pieces of bitmap indication information with a size of $M_v$ (in this case, $M_v = 2$) are reported in Part 1 to indicate that there are $C_l$, $l$ = 1,2 columns in the combination coefficient of the two layers including non-zero coefficients respectively, i.e., the first indication information includes two pieces of first information with a size of $M_v$. In addition, the UE also reports two pieces of information with a size of $\lceil \log_2(K_{l,1}M_v) \rceil = 4$ bits in Part 1 to indicate the quantity of reported non-zero coefficients of each layer. As $K_1^{NZ} = K_{1,1}C_1 = 8$ , i.e., all the coefficients of the transport layer 1 in column $C_1$ need to be reported, then the bitmap used to indicate the locations of the non-zero coefficients of this layer can be omitted and not reported. Since the quantity of non-zero coefficients reported for the transport layer 2 $K_2^{NZ} < K_{2,1}C_2$ , the bitmap used to indicate the locations of non-zero coefficients of this layer cannot be omitted, i.e., a bitmap with a size of $K_{2,1}C_2 = 8$ is reported in Part 2 to indicate the locations of non-zero coefficients. In this way, the second indication information reported in Part 2 includes only the second information corresponding to the transport layer 2. The network side device may determine whether to omit the bitmap used to indicate the locations of the non-zero coefficients of the corresponding layer based on the two pieces of indication information reported by the UE in Part 1 that are for indicating a quantity of non-zero coefficients of each layer and for indicating which columns of the combination coefficient matrix contain non-zero coefficients, so as to determine the length of Part 2 to perform correct decoding. From the above, the total overhead for determining the quantity of non-zero coefficients of the two layers and locations of the non-zero coefficients is

$$\lceil \log_2(K_{l,1}M_v) \rceil * L + M_v * L + K_{2,1}C_2 = \lceil \log_2(8*2) \rceil * 2 + 2*2 + 8*1 = 20$$

bits. In a case that a bitmap with a size of $K_{l,1}M_v$ is adopted for each layer for indication, i.e., information of $\lceil \log_2(2\lceil \beta K_1 M_v \rceil) \rceil = 4$ bits is reported in Part 1 to indicate the total quantity of non-zero coefficients in the two layers, and

$$\sum_{l=1}^{L} K_{l,1}M_v = K_{1,1} * 1 + K_{2,1} * 1 = 32$$

bits are reported in Part 2, then the total overhead is

$$\lceil \log_2(2\lceil \beta K_1 M_v \rceil) \rceil + \sum_{l=1}^{L} K_{l,1}M_v = 36$$

bits. It can be seen that, with the method according to the embodiments of the present disclosure, a reduction of 16 bits can be realized.

It should also be understood that in the embodiments, a coefficient of the combination coefficient matrix being zero or non-zero refers to the amplitude of the corresponding coefficient being zero or non-zero. Furthermore, only non-zero coefficients are allowed to be reported to the network side device.

The network side device according to the embodiments of the present disclosure may be, but is not limited to, a base station.

In summary, in the method according to the embodiments of the present disclosure, the terminal transmits at least two of the first indication information, the second indication information, and the third indication information. In this way, locations of non-zero coefficients of the transport layer can be indicated flexibly based on requirements of scenarios, which reduces the overhead for indication of the locations of the zero coefficients.

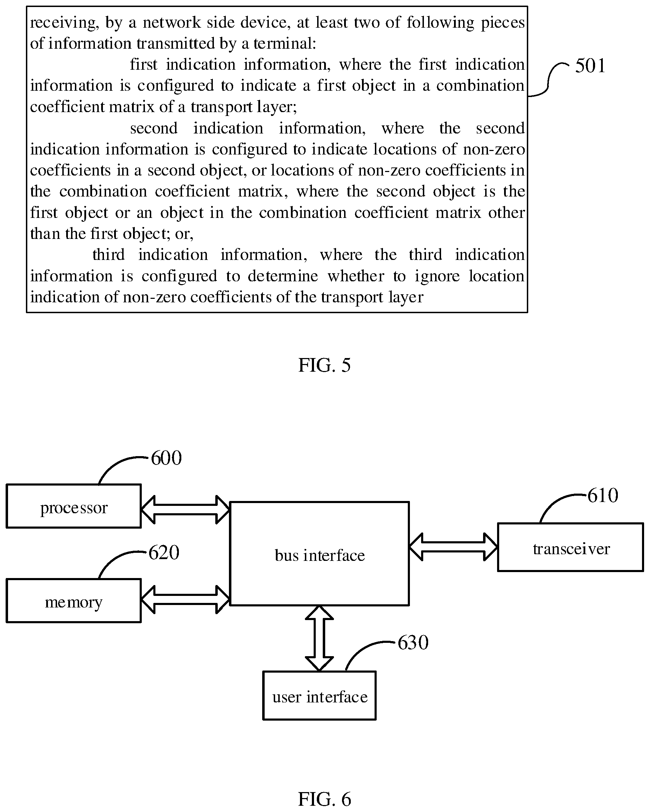

As shown in FIG. 5, embodiments of the present disclosure also provide a method for receiving channel state information, including:

Step 501, receiving, by a network side device, at least two of following pieces of information transmitted by a terminal:

first indication information, where the first indication information is configured to indicate a first object in a combination coefficient matrix of a transport layer;

second indication information, where the second indication information is configured to indicate locations of non-zero coefficients in a second object, or locations of non-zero coefficients in the combination coefficient matrix, where the second object is the first object or an object in the combination coefficient matrix other than the first object; or,

third indication information, where the third indication information is configured to determine whether to ignore location indication of non-zero coefficients of the transport layer.

In this way, the network side device receives at least two of the first indication information, the second indication information, and the third indication information reported by the terminal based on requirements of scenarios, which avoids a bitmap of $K_1 \times M_v$ reported for each transport layer to indicate non-zero coefficients and reduces unnecessary overhead.

Optionally, in a case that the first object is a column or row with all zero coefficients, the second object is the object in the combination coefficient matrix other than the first object; and

in a case that the first object is a column or row with non-zero coefficients, the second object is the first object.

Optionally, after the receiving, by the network side device, at least two of the first indication information, the second indication information, or the third indication information transmitted by the terminal, the method further includes: determining, by the network side device, locations of non-zero coefficients in the combination coefficient matrix based on at least two of the first indication information, the second indication information, or the third indication information.

Optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

It should be noted that this method is implemented in conjunction with the method for transmitting the channel state information according to the above embodiments, and the implementations of the above embodiments of the method for transmitting the channel state information are applicable to this method, and same technical effects can be achieved.

As shown in FIG. 6, embodiments of the present disclosure also provide a device for transmitting channel state information, including: a memory 620, a transceiver 610, and a processor 600; where the memory 620 is configured to store program instructions; the processor 600 is configured to read the program instructions in the memory 620; the transceiver 610 is configured to send and receive data under control of the processor 600 and perform following operations:

transmitting at least two of following pieces of information:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and

in a case that the first object is a column or row with non-zero coefficients, the second object is the first object.

Optionally, the first indication information includes N1 pieces of first information, N1 is an integer greater than or equal to 1 and less than or equal to L, and L is a quantity of layers of the transport layer.

Optionally, in a case that a quantity of columns of the combination coefficient matrix is 2, a size of the first information is 1 bit.

Optionally, a size of the first information is determined by a size in a first dimension of the combination coefficient matrix;

in a case that the first object is the column with all zero coefficients in the combination coefficient matrix or the first object is the column with non-zero coefficients in the combination coefficient matrix, the first dimension is column; and
in a case that the first object is the row with all zero coefficients in the combination coefficient matrix or the first object is the row with non-zero coefficients in the combination coefficient matrix, the first dimension is row.

Optionally, the size of the first information is equal to the size in the first dimension; or,

the size of the first information is $\max_{Y_i}\left\{\left\lceil\log_2\binom{X}{Y_i}\right\rceil\right\}+\lceil\log_2(X)\rceil$ , $1 \le Y_i \le X$; where X is the size in the first dimension, $Y_i$ is an i-th number selected from X, $\max_{Y_i}\left\{\left\lceil\log_2\binom{X}{Y_i}\right\rceil\right\}$ represents a maximum quantity of bits required by the first information in a case of selecting different $Y_i$ from X.

Optionally, the second indication information includes N2 pieces of second information, N2 is an integer greater than or equal to 1 and less than or equal to L, and L is a quantity of layers of the transport layer.

Optionally, a size of the second information is determined by a size in a second dimension of the combination coefficient matrix, and a quantity of columns or rows of the first obj ect; or,

a size of the second information is determined by a size in a first dimension of the combination coefficient matrix, a size in a second dimension of the combination coefficient matrix, and a quantity of columns or rows of the first object; the second dimension of the combination coefficient matrix and the first dimension of the combination coefficient matrix are different dimensions of the combination coefficient matrix.

Optionally, in a case that the size of the second information is determined by the size in the second dimension of the combination coefficient matrix, and the quantity of columns or rows of the first object,

the size of the second information is ZY or $\left\lceil\log_2\binom{ZY}{K'}\right\rceil$; where Z is the size in the second dimension, Y is the quantity of columns or rows of the first object, and K' is a quantity of non-zero coefficients in the combination coefficient matrix.

Optionally, in a case that the size of the second information is determined by the size in the first dimension of the combination coefficient matrix, the size in the second dimension of the combination coefficient matrix, and the quantity of columns or rows of the first object,

the size of the second information is $Z(X - Y)$ or $\left\lceil\log_2\binom{Z(X-Y)}{K'}\right\rceil$ ; where X is the size in the first dimension, Y is the quantity of columns or rows of the first object, Z is the size in the second dimension, and K' is a quantity of non-zero coefficients in the combination coefficient matrix.

Optionally, in a case that the first indication information is transmitted, the first indication information is carried in a first part of the channel state information;

in a case that the second indication information is transmitted, the second indication information is carried in a second part of the channel state information;
in a case that the third indication information is transmitted, the third indication information is carried in the first part of the channel state information.

Optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

Optionally, a size of the third information is $\lceil\log_2(\beta ZX)\rceil$ , where X is a size in a first dimension of the combination coefficient matrix, Z is a size in a second dimension of the combination coefficient matrix, and $\beta$ is a second parameter.

Optionally, a size of the fourth information is $\lceil\log_2(P)\rceil$ bits, where P is a preset maximum quantity of non-zero coefficients allowed to be reported by all layers.

Optionally, a size of the fifth information is 1*N3 bits, where N3 is an integer greater than or equal to 1 and less than or equal to L, and L is a quantity of layers of the transport layer.

Optionally, the processor is configured to perform following operations:

determining whether to transmit at least two of the first indication information, the second indication information, or the third indication information based on configuration information of a network side device;
where the configuration information includes at least one of following:

a quantity of ports of the terminal;
a quantity of frequency-domain basis vectors; or,
a first parameter.

In FIG. 6, a bus architecture may include any quantity of interconnected buses and bridges. Various circuits including one or more processors represented by the processor 600 and a memory represented by the memory 620 are linked. The bus architecture may further link various other circuits together, such as a periphery component, a voltage stabilizer and a power management circuit, which are known in the art and are not further described herein. A bus interface provides an interface. The transceiver 610 may be multiple elements, i.e., including a transmitter and a receiver, providing a unit for communicating with various other devices on transmission media. The transmission media include a wireless channel, a wired channel, an optical cable, or other transmission media. For different user equipment, the user interface 630 may be an interface capable of connecting externally and internally with the required equipment. The connected equipment includes but not limited to a keypad, a display, a speaker, a microphone, a joystick, etc.

The processor 600 is in charge of managing the bus architecture and common processes. The memory 620 may store data used by the processor 600 in performing operations.

Optionally, the processor 600 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor 600 may adopt a multi-core architecture.

The processor 600 is configured to execute any of the methods in the embodiments of the present application according to obtained executable instructions by calling the program instructions stored in the memory. The processor 600 and the memory 620 may be physically arranged separately.

The device of the embodiments of the present disclosure reports at least two of the first indication information, the second indication information, and the third indication information. For example, only location indication of non-zero coefficients of a combination coefficient matrix of a specific transport layer or location indication of non-zero coefficients of a specific object of the combination coefficient matrix of the transport layer, etc., is reported. In this way, reporting a bitmap of $K_1 \times M_v$ for each transport layer to indicate non-zero coefficients is avoided and unnecessary overhead is reduced.

It is to be noted that the device according to the embodiments of the present disclosure can realize all the method steps achieved by the above method embodiments and the same technical effects can be realized. The same parts of the present embodiments as the method embodiments, and the beneficial effects, are not be repeated herein.

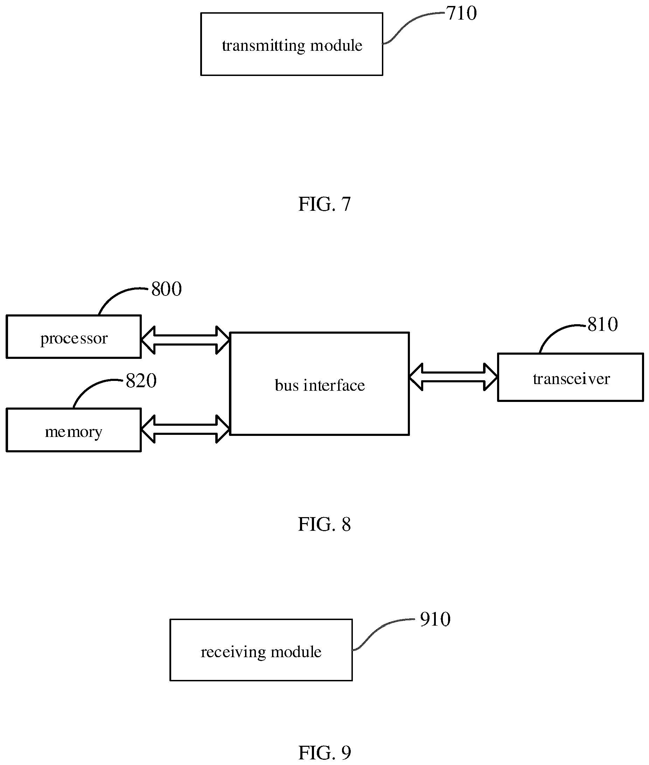

As shown in FIG. 7, embodiments of the present disclosure also provide a device for transmitting channel state information, including:

a transmitting module 710, configured to transmit at least two of following pieces of information:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.

Optionally, the first indication information includes N1 pieces of first information, N1 is an integer greater than or equal to 1 and less than or equal to L, and L is a quantity of layers of the transport layer.

Optionally, in a case that a quantity of columns of the combination coefficient matrix is 2, a size of the first information is 1 bit.

Optionally, a size of the first information is determined by a size in a first dimension of the combination coefficient matrix;

in a case that the first object is the column with all zero coefficients in the combination coefficient matrix or the first object is the column with non-zero coefficients in the combination coefficient matrix, the first dimension is column; and
in a case that the first object is the row with all zero coefficients in the combination coefficient matrix or the first object is the row with non-zero coefficients in the combination coefficient matrix, the first dimension is row.

Optionally, the size of the first information is equal to the size in the first dimension; or,

the size of the first information is $\max_{Y_i}\left\{\left\lceil\log_2\binom{X}{Y_i}\right\rceil\right\}+\lceil\log_2(X)\rceil$, $1 \le Y_i \le X$; where X is the size in the first dimension, $Y_i$ is an i-th number selected from X, $\max_{Y_i}\left\{\left\lceil\log_2\binom{X}{Y_i}\right\rceil\right\}$ represents a maximum quantity of bits required by the first information in a case of selecting different $Y_i$ from X.

Optionally, the second indication information includes N2 pieces of second information, N2 is an integer greater than or equal to 1 and less than or equal to L, and L is a quantity of layers of the transport layer.

Optionally, a size of the second information is determined by a size in a second dimension of the combination coefficient matrix, and a quantity of columns or rows of the first obj ect; or,

a size of the second information is determined by a size in a first dimension of the combination coefficient matrix, a size in a second dimension of the combination coefficient matrix, and a quantity of columns or rows of the first object;
the second dimension of the combination coefficient matrix and the first dimension of the combination coefficient matrix are different dimensions of the combination coefficient matrix.

Optionally, in a case that the size of the second information is determined by the size in the second dimension of the combination coefficient matrix, and the quantity of columns or rows of the first object,

the size of the second information is ZY or $\left\lceil\log_2\binom{ZY}{K'}\right\rceil$; where Z is the size in the second dimension, Y is the quantity of columns or rows of the first object, and K' is a quantity of non-zero coefficients in the combination coefficient matrix.

Optionally, in a case that the size of the second information is determined by the size in the first dimension of the combination coefficient matrix, the size in the second dimension of the combination coefficient matrix, and the quantity of columns or rows of the first object,

the size of the second information is Z(X - Y) or $\left\lceil\log_2\binom{Z(X - Y)}{K'}\right\rceil$; where X is the size in the first dimension, Y is the quantity of columns or rows of the first object, Z is the size in the second dimension, and K' is a quantity of non-zero coefficients in the combination coefficient matrix.

Optionally, in a case that the first indication information is transmitted, the first indication information is carried in a first part of the channel state information;

in a case that the second indication information is transmitted, the second indication information is carried in a second part of the channel state information;
in a case that the third indication information is transmitted, the third indication information is carried in the first part of the channel state information.

Optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

Optionally, a size of the third information is $\lceil\log_2(\beta ZX)\rceil$, where X is a size in a first dimension of the combination coefficient matrix, Z is a size in a second dimension of the combination coefficient matrix, and $\beta$ is a second

parameter.

Optionally, a size of the fourth information is $\lceil \log_2(P) \rceil$ bits, where P is a preset maximum quantity of non-zero coefficients allowed to be reported by all layers.

Optionally, a size of the fifth information is 1*N3 bits, where N3 is an integer greater than or equal to 1 and less than or equal to L, and L is a quantity of layers of the transport layer.

Optionally, the device further includes:

a first determining module, configured to determine whether to transmit at least two of the first indication information, the second indication information, or the third indication information based on configuration information of a network side device;
where the configuration information includes at least one of following:
a quantity of ports of the terminal;

a quantity of frequency-domain basis vectors; or,
a first parameter.

The device of the embodiments of the present disclosure reports at least two of the first indication information, the second indication information, and the third indication information. As a result, reporting of only location indication of non-zero coefficients of a combination coefficient matrix of a specific transport layer or location indication of non-zero coefficients of a specific object of the combination coefficient matrix of the transport layer, etc., can be realized, which avoids reporting a bitmap of $K_1 \times M_v$ for each transport layer to indicate non-zero coefficients and reduces unnecessary overhead.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

It is to be noted that the device according to the embodiments of the present disclosure can realize all the method steps achieved by the above method embodiments and the same technical effects can be realized. The same parts of the present embodiments as the method embodiments, and the beneficial effects, are not be repeated herein.

In some embodiments of the present disclosure, a processor readable storage medium is further provided, the processor readable storage medium stores program instructions, and the program instructions are used to cause a processor to perform following step:

transmitting at least two of following pieces of information:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or,
third indication information, where the third indication information is configured to determine whether to ignore location indication of non-zero coefficients of the transport layer.

The program instructions, when executed by the processor, can realize all of the implementations in the above embodiment of the method applied to the terminal side as shown in FIG. 1, and will not be repeated herein to avoid repetition.

As shown in FIG. 8, embodiments of the present disclosure also provide a device for receiving channel state information, including: a memory 820, a transceiver 810, and a processor 800; the memory 820 is configured to store program instructions; the processor 800 is configured to read the program instructions in the memory 820; the transceiver 810 is configured to send and receive data under control of the processor 800 and perform following operations: receiving at least two of following pieces of information transmitted by a terminal:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or, third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and
in a case that the first object is a column or row with non-zero coefficients, the second object is the first object.
Optionally, the processor is configured to perform following operations:
determining locations of non-zero coefficients in the combination coefficient matrix based on at least two of the first indication information, the second indication information, or the third indication information.
Optionally, the third indication information includes at least one of following pieces of information:

third information, where the third information is configured to indicate a quantity of non-zero coefficients of each transport layer;
fourth information, where the fourth information is configured to indicate a quantity of non-zero coefficients of all transport layers; or,
fifth information, where the fifth information is configured to indicate whether to ignore location indication of non-zero coefficients of the combination coefficient matrix of the transport layer.

In FIG. 8, a bus architecture may include any quantity of interconnected buses and bridges. Various circuits including one or more processors represented by the processor 800 and a memory represented by the memory 820 are linked. The bus architecture may further link various other circuits together, such as a periphery component, a voltage stabilizer and a power management circuit, which are known in the art and are not further described herein. A bus interface provides an interface. The transceiver 810 may be multiple elements, i.e., including a transmitter and a receiver, providing a unit for communicating with various other devices on transmission media. The transmission media include a wireless channel, a wired channel, an optical cable, or other transmission media. The processor 800 is in charge of managing the bus architecture and common processes. The memory 820 may store data used by the processor 810 in performing operations.
The processor 800 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.
The device of the embodiments of the present disclosure receives at least two of the first indication information, the second indication information, and the third indication information reported by the terminal based on requirements of scenarios, which avoids reporting a bitmap of $K_1 \times M_v$ for each transport layer to indicate non-zero coefficients and reduces unnecessary overhead.
It is to be noted that the device according to the embodiments of the present disclosure can realize all the method steps achieved by the above method embodiments and the same technical effects can be realized. The same parts of the present embodiments as the method embodiments, and the beneficial effects, are not be repeated herein.
As shown in FIG. 9, embodiments of the present disclosure also provide a device for receiving channel state information, including:
a receiving module 910, configured to receive at least two of following pieces of information transmitted by a terminal:

first indication information, where the first indication information is configured to indicate a first object in a combination coefficient matrix of a transport layer;
second indication information, where the second indication information is configured to indicate locations of non-zero coefficients in a second object, or locations of non-zero coefficients in the combination coefficient matrix, where the second object is the first object or an object in the combination coefficient matrix other than the first object; or, third indication information, where the third indication information is configured to determine whether to ignore location indication of non-zero coefficients of the transport layer.

Optionally, in a case that the first object is a column or row with all zero coefficients, the second object is the object in the combination coefficient matrix other than the first object; and

in a case that the first object is a column or row with non-zero coefficients, the second object is the first object.

Optionally, the device includes:

a second determining module, configured to determine locations of non-zero coefficients in the combination coefficient matrix based on at least two of the first indication information, the second indication information, or the third indication information.

Optionally, the third indication information includes at least one of following pieces of information:

third information, where the third information is configured to indicate a quantity of non-zero coefficients of each transport layer;

fourth information, where the fourth information is configured to indicate a quantity of non-zero coefficients of all transport layers; or,

fifth information, where the fifth information is configured to indicate whether to ignore location indication of non-zero coefficients of the combination coefficient matrix of the transport layer.

The device of the embodiment of the present disclosure receives at least two of the first indication information, the second indication information, and the third indication information that need to be reported by the terminal for the scenario, and avoids reporting a bitmap indication of non-zero coefficients of $K_1 \times M_v$ for each transport layer, reducing unnecessary overhead.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

It is to be noted that the device according to the embodiments of the present disclosure can realize all the method steps achieved by the above method embodiments and the same technical effects can be realized. The same parts of the present embodiments as the method embodiments, and the beneficial effects, are not be repeated herein.

In some embodiments of the present disclosure, a processor readable storage medium is further provided, the processor readable storage medium stores program instructions, and the program instructions are used to cause a processor to perform following step:

receiving at least two of following pieces of information transmitted by a terminal:

first indication information, where the first indication information is configured to indicate a first object in a combination coefficient matrix of a transport layer;

second indication information, where the second indication information is configured to indicate locations of non-zero coefficients in a second object, or locations of non-zero coefficients in the combination coefficient matrix, where the second object is the first object or an object in the combination coefficient matrix other than the first object; or,

third indication information, where the third indication information is configured to determine whether to ignore location indication of non-zero coefficients of the transport layer.

The program instructions, when executed by the processor, can realize all the implementations in the above embodiments of the method applied to the network side device as shown in FIG. 5, which are not described herein to avoid repetition.

The technical solutions in the embodiments of the present disclosure may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal device may be different. For example, in 5G systems, the terminal device may be referred to as a user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal device may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminal devices through one or more sectors on air interfaces, or may have other names. The network device may be configured to exchange received air frames and Internet protocol (Internet Protocol, IP) packets, serving as a router between the wireless terminal devices and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2D-MIMO, 3D-MIMO, FD-MIMO, or Massive MIMO, or may be diversity transmission, or precoding transmission, or beamforming transmission, etc.

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

**Claims**

1. A method for transmitting channel state information, comprising:
   transmitting, by a terminal, at least two of following pieces of information:

   first indication information, wherein the first indication information is configured to indicate a first object in a combination coefficient matrix of a transport layer;
   second indication information, wherein the second indication information is configured to indicate locations of non-zero coefficients in a second object, or locations of non-zero coefficients in the combination coefficient matrix, wherein the second object is the first object or an object in the combination coefficient matrix other than the first object; or,
   third indication information, wherein the third indication information is configured to determine whether to ignore location indication of non-zero coefficients of the transport layer.

2. The method according to claim 1, wherein in a case that the first object is a column or row with all zero coefficients, the second object is the object in the combination coefficient matrix other than the first object; and
   in a case that the first object is a column or row with non-zero coefficients, the second object is the first object.

3. The method according to claim 2, wherein the first indication information comprises N1 pieces of first information, N1 is an integer greater than or equal to 1 and less than or equal to L, and L is a quantity of layers of the transport layer.

4. The method according to claim 3, wherein in a case that a quantity of columns of the combination coefficient matrix is 2, a size of the first information is 1 bit.

5. The method according to claim 3, wherein a size of the first information is determined by a size in a first dimension of the combination coefficient matrix;

   wherein in a case that the first object is the column with all zero coefficients in the combination coefficient matrix or the first object is the column with non-zero coefficients in the combination coefficient matrix, the first dimension is column; and
   wherein in a case that the first object is the row with all zero coefficients in the combination coefficient matrix or the first object is the row with non-zero coefficients in the combination coefficient matrix, the first dimension is row.

6. The method according to claim 5, wherein:

   the size of the first information is equal to the size in the first dimension; or,

the size of the first information is $\max_{Y_i}\left\{\left\lceil \log_2\binom{X}{Y_i}\right\rceil\right\}+\lceil\log_2(X)\rceil$ , $1 \le Y_i \le X$; wherein X is the size in the first dimension, $Y_i$ is an i-th number selected from X, $\max_{Y_i}\left\{\left\lceil \log_2\binom{X}{Y_i}\right\rceil\right\}$ represents a maximum quantity of bits required by the first information in a case of selecting different $Y_i$ from X.

7. The method according to claim 2, wherein the second indication information comprises N2 pieces of second information, N2 is an integer greater than or equal to 1 and less than or equal to L, and L is a quantity of layers of the transport layer.

8. The method according to claim 7, wherein:

a size of the second information is determined by a size in a second dimension of the combination coefficient matrix, and a quantity of columns or rows of the first object; or,
a size of the second information is determined by a size in a first dimension of the combination coefficient matrix, a size in a second dimension of the combination coefficient matrix, and a quantity of columns or rows of the first object;
wherein the second dimension of the combination coefficient matrix and the first dimension of the combination coefficient matrix are different dimensions of the combination coefficient matrix.

9. The method according to claim 8, wherein in a case that the size of the second information is determined by the size in the second dimension of the combination coefficient matrix, and the quantity of columns or rows of the first object,

the size of the second information is ZY or $\left\lceil \log_2\binom{ZY}{K'}\right\rceil$; wherein Z is the size in the second dimension, Y is the quantity of columns or rows of the first object, and K' is a quantity of non-zero coefficients in the combination coefficient matrix.

10. The method according to claim 8, wherein in a case that the size of the second information is determined by the size in the first dimension of the combination coefficient matrix, the size in the second dimension of the combination coefficient matrix, and the quantity of columns or rows of the first object,

the size of the second information is $Z(X-Y)$ or $\left\lceil \log_2\binom{Z(X-Y)}{K'}\right\rceil$; wherein X is the size in the first dimension, Y is the quantity of columns or rows of the first object, Z is the size in the second dimension, and K' is a quantity of non-zero coefficients in the combination coefficient matrix.

11. The method according to claim 1, wherein,

in a case that the terminal transmits the first indication information, the first indication information is carried in a first part of the channel state information;
in a case that the terminal transmits the second indication information, the second indication information is carried in a second part of the channel state information;
in a case that the terminal transmits the third indication information, the third indication information is carried in the first part of the channel state information.

12. The method according to claim 1, wherein the third indication information comprises at least one of following pieces of information:

third information, wherein the third information is configured to indicate a quantity of non-zero coefficients of each transport layer;
fourth information, wherein the fourth information is configured to indicate a quantity of non-zero coefficients of all transport layers; or,
fifth information, wherein the fifth information is configured to indicate whether to ignore location indication of non-zero coefficients of the combination coefficient matrix of the transport layer.

13. The method according to claim 12, wherein a size of the third information is $\lceil \log_2(\beta ZX) \rceil$ , wherein X is a size in a first dimension of the combination coefficient matrix, Z is a size in a second dimension of the combination coefficient matrix, and $\beta$ is a second parameter.

14. The method according to claim 12, wherein a size of the fourth information is $\lceil \log_2(P) \rceil$ bits, wherein P is a preset maximum quantity of non-zero coefficients allowed to be reported by all layers.

15. The method according to claim 13, wherein a size of the fifth information is 1*N3 bits, wherein N3 is an integer greater than or equal to 1 and less than or equal to L, and L is a quantity of layers of the transport layer.

16. The method according to claim 1, further comprising:

      determining whether to transmit at least two of the first indication information, the second indication information, or the third indication information based on configuration information of a network side device;
      wherein the configuration information comprises at least one of following:

            a quantity of ports of the terminal;
            a quantity of frequency-domain basis vectors; or,
            a first parameter.

17. A method for receiving channel state information, comprising:
      receiving, by a network side device, at least two of following pieces of information transmitted by a terminal:

            first indication information, wherein the first indication information is configured to indicate a first object in a combination coefficient matrix of a transport layer;
            second indication information, wherein the second indication information is configured to indicate locations of non-zero coefficients in a second object, or locations of non-zero coefficients in the combination coefficient matrix, wherein the second object is the first object or an object in the combination coefficient matrix other than the first object; or,
            third indication information, wherein the third indication information is configured to determine whether to ignore location indication of non-zero coefficients of the transport layer.

18. The method according to claim 17, wherein in a case that the first object is a column or row with all zero coefficients, the second object is the object in the combination coefficient matrix other than the first object; and
      in a case that the first object is a column or row with non-zero coefficients, the second object is the first object.

19. The method according to claim 17, wherein after the receiving, by the network side device, at least two of the first indication information, the second indication information, or the third indication information transmitted by the terminal, the method further comprises:
      determining, by the network side device, locations of non-zero coefficients in the combination coefficient matrix based on at least two of the first indication information, the second indication information, or the third indication information.

20. The method according to claim 17, wherein the third indication information comprises at least one of following pieces of information:

            third information, wherein the third information is configured to indicate a quantity of non-zero coefficients of each transport layer;
            fourth information, wherein the fourth information is configured to indicate a quantity of non-zero coefficients of all transport layers; or,
            fifth information, wherein the fifth information is configured to indicate whether to ignore location indication of non-zero coefficients of the combination coefficient matrix of the transport layer.

21. A device for transmitting channel state information, comprising: a memory, a transceiver, and a processor;
      wherein the memory is configured to store program instructions; the processor is configured to read the program instructions in the memory; the transceiver is configured to send and receive data under control of the processor and perform following operations:
transmitting at least two of following pieces of information:

first indication information, wherein the first indication information is configured to indicate a first object in a combination coefficient matrix of a transport layer;
second indication information, wherein the second indication information is configured to indicate locations of non-zero coefficients in a second object, or locations of non-zero coefficients in the combination coefficient matrix, wherein the second object is the first object or an object in the combination coefficient matrix other than the first object; or,
third indication information, wherein the third indication information is configured to determine whether to ignore location indication of non-zero coefficients of the transport layer.

22. A device for transmitting channel state information, comprising:
a transmitting module, configured to transmit at least two of following pieces of information:

first indication information, wherein the first indication information is configured to indicate a first object in a combination coefficient matrix of a transport layer;
second indication information, wherein the second indication information is configured to indicate locations of non-zero coefficients in a second object, or locations of non-zero coefficients in the combination coefficient matrix, wherein the second object is the first object or an object in the combination coefficient matrix other than the first object; or,
third indication information, wherein the third indication information is configured to determine whether to ignore location indication of non-zero coefficients of the transport layer.

23. The device according to claim 22, wherein in a case that the first object is a column or row with all zero coefficients, the second object is the object in the combination coefficient matrix other than the first object; and
in a case that the first object is a column or row with non-zero coefficients, the second object is the first object.

24. The device according to claim 23, wherein the first indication information comprises N1 pieces of first information, N1 is an integer greater than or equal to 1 and less than or equal to L, and L is a quantity of layers of the transport layer.

25. The device according to claim 24, wherein in a case that a quantity of columns of the combination coefficient matrix is 2, a size of the first information is 1 bit.

26. The device according to claim 24, wherein a size of the first information is determined by a size in a first dimension of the combination coefficient matrix;

wherein in a case that the first object is the column with all zero coefficients in the combination coefficient matrix or the first object is the column with non-zero coefficients in the combination coefficient matrix, the first dimension is column; and
wherein in a case that the first object is the row with all zero coefficients in the combination coefficient matrix or the first object is the row with non-zero coefficients in the combination coefficient matrix, the first dimension is row.

27. The a device according to claim 26, wherein:

the size of the first information is equal to the size in the first dimension; or,

the size of the first information is $\max_{Y_i}\left\{\left\lceil\log_2\binom{X}{Y_i}\right\rceil\right\}+\lceil\log_2(X)\rceil$, $1 \leq Y_i \leq X$; wherein X is the size in the

first dimension, $Y_i$ is an i-th number selected from X, $\max_{Y_i}\left\{\left\lceil\log_2\binom{X}{Y_i}\right\rceil\right\}$ represents a maximum quantity of bits required by the first information in a case of selecting different $Y_i$ from X.

28. The device according to claim 22, wherein the second indication information comprises N2 pieces of second information, N2 is an integer greater than or equal to 1 and less than or equal to L, and L is a quantity of layers of the transport layer.

29. The device according to claim 28, wherein:

a size of the second information is determined by a size in a second dimension of the combination coefficient matrix, and a quantity of columns or rows of the first object; or,
a size of the second information is determined by a size in a first dimension of the combination coefficient matrix, a size in a second dimension of the combination coefficient matrix, and a quantity of columns or rows of the first object;
wherein the second dimension of the combination coefficient matrix and the first dimension of the combination coefficient matrix are different dimensions of the combination coefficient matrix.

30. The device according to claim 29, wherein in a case that the size of the second information is determined by the size in the second dimension of the combination coefficient matrix, and the quantity of columns or rows of the first object,

the size of the second information is ZY or $\left\lceil \log_2 \binom{ZY}{K'} \right\rceil$; wherein Z is the size in the second dimension, Y is the quantity of columns or rows of the first object, and K' is a quantity of non-zero coefficients in the combination coefficient matrix.

31. The device according to claim 29, wherein in a case that the size of the second information is determined by the size in the first dimension of the combination coefficient matrix, the size in the second dimension of the combination coefficient matrix, and the quantity of columns or rows of the first object,

the size of the second information is $Z(X - Y)$ or $\left\lceil \log_2 \binom{Z(X-Y)}{K'} \right\rceil$; wherein X is the size in the first dimension, Y is the quantity of columns or rows of the first object, Z is the size in the second dimension, and K' is a quantity of non-zero coefficients in the combination coefficient matrix.

32. The device according to claim 22, wherein,

in a case that the first indication information is transmitted, the first indication information is carried in a first part of the channel state information;
in a case that the second indication information is transmitted, the second indication information is carried in a second part of the channel state information;
in a case that the third indication information is transmitted, the third indication information is carried in the first part of the channel state information.

33. The device according to claim 22, wherein the third indication information comprises at least one of following pieces of information:

third information, wherein the third information is configured to indicate a quantity of non-zero coefficients of each transport layer;
fourth information, wherein the fourth information is configured to indicate a quantity of non-zero coefficients of all transport layers; or,
fifth information, wherein the fifth information is configured to indicate whether to ignore location indication of non-zero coefficients of the combination coefficient matrix of the transport layer.

34. The device according to claim 33, wherein a size of the third information is $\lceil \log_2(\beta Z X) \rceil$, wherein X is a size in a first dimension of the combination coefficient matrix, Z is a size in a second dimension of the combination coefficient matrix, and $\beta$ is a second parameter.

35. The device according to claim 33, wherein a size of the fourth information is $\lceil \log_2(P) \rceil$ bits, wherein P is a preset maximum quantity of non-zero coefficients allowed to be reported by all layers.

36. The device according to claim 33, wherein a size of the fifth information is 1*N3 bits, wherein N3 is an integer greater than or equal to 1 and less than or equal to L, and L is a quantity of layers of the transport layer.

37. The device according to claim 22, further comprising:

a first determining module, configured to determine whether to transmit at least two of the first indication information, the second indication information, or the third indication information based on configuration information of a network side device;
wherein the configuration information comprises at least one of following:

a quantity of ports of the terminal;
a quantity of frequency-domain basis vectors; or,
a first parameter.

38. A device for receiving channel state information, comprising: a memory, a transceiver, and a processor;
wherein the memory is configured to store program instructions; the processor is configured to read the program instructions in the memory; the transceiver is configured to send and receive data under control of the processor and perform following operations:
receiving at least two of following pieces of information transmitted by a terminal:

first indication information, wherein the first indication information is configured to indicate a first object in a combination coefficient matrix of a transport layer;
second indication information, wherein the second indication information is configured to indicate locations of non-zero coefficients in a second object, or locations of non-zero coefficients in the combination coefficient matrix, wherein the second object is the first object or an object in the combination coefficient matrix other than the first object; or,
third indication information, wherein the third indication information is configured to determine whether to ignore location indication of non-zero coefficients of the transport layer.

39. A device for receiving channel state information, comprising:
a receiving module, configured to receive at least two of following pieces of information transmitted by a terminal:

first indication information, wherein the first indication information is configured to indicate a first object in a combination coefficient matrix of a transport layer;
second indication information, wherein the second indication information is configured to indicate locations of non-zero coefficients in a second object, or locations of non-zero coefficients in the combination coefficient matrix, wherein the second object is the first object or an object in the combination coefficient matrix other than the first object; or,
third indication information, wherein the third indication information is configured to determine whether to ignore location indication of non-zero coefficients of the transport layer.

40. The device according to claim 39, wherein in a case that the first object is a column or row with all zero coefficients, the second object is the object in the combination coefficient matrix other than the first object; and
in a case that the first object is a column or row with non-zero coefficients, the second object is the first object.

41. The device according to claim 39, comprising:
a second determining module, configured to determine locations of non-zero coefficients in the combination coefficient matrix based on at least two of the first indication information, the second indication information, or the third indication information.

42. The device according to claim 39, wherein the third indication information comprises at least one of following pieces of information:

third information, wherein the third information is configured to indicate a quantity of non-zero coefficients of each transport layer;
fourth information, wherein the fourth information is configured to indicate a quantity of non-zero coefficients of all transport layers; or,
fifth information, wherein the fifth information is configured to indicate whether to ignore location indication of non-zero coefficients of the combination coefficient matrix of the transport layer.

43. A processor readable storage medium, having a computer program stored thereon, wherein the computer program is used to cause a processor to perform the method for transmitting the channel state information according to any one of claims 1 to 16, or, the method for receiving the channel state information according to any one of claims 17 to 20.

transmitting, by a terminal, at least two of following pieces of information:

first indication information, where the first indication information is configured to indicate a first object in a combination coefficient matrix of a transport layer;

second indication information, where the second indication information is configured to indicate locations of non-zero coefficients in a second object, or locations of non-zero coefficients in the combination coefficient matrix, where the second object is the first object or an object in the combination coefficient matrix other than the first object; or,

third indication information, where the third indication information is configured to determine whether to ignore location indication of non-zero coefficients of the transport layer

~ 101

FIG. 1

$W_{1,2}$ of transport layer 1    $W_{2,2}$ of transport layer 2

FIG. 2

FIG. 3

FIG. 4

receiving, by a network side device, at least two of following pieces of information transmitted by a terminal:

first indication information, where the first indication information is configured to indicate a first object in a combination coefficient matrix of a transport layer;

second indication information, where the second indication information is configured to indicate locations of non-zero coefficients in a second object, or locations of non-zero coefficients in the combination coefficient matrix, where the second object is the first object or an object in the combination coefficient matrix other than the first object; or,

third indication information, where the third indication information is configured to determine whether to ignore location indication of non-zero coefficients of the transport layer

501

FIG. 5

processor 600

bus interface

transceiver 610

memory 620

user interface 630

FIG. 6

transmitting module —710

FIG. 7

processor —800

bus interface

memory —820

transceiver —810

FIG. 8

receiving module —910

FIG. 9

## INTERNATIONAL SEARCH REPORT

International application No.

**PCT/CN2022/100576**

### A. CLASSIFICATION OF SUBJECT MATTER

H04B 7/0417(2017.01)i

According to International Patent Classification (IPC) or to both national classification and IPC

### B. FIELDS SEARCHED

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 信道状态信息, 组合系数矩阵, 上报, 报告, 反馈, 位图, 指示, 忽略, 忽视, 零, 非零, 系数, 位置, 矩阵, 行, 列, 层, 开销, CSI, combined coefficient matrix, report, feedback, bitmap, indicate, ignore, zero, non-zero, coefficient, location, position, matrix, row, column, layer, overhead

### C. DOCUMENTS CONSIDERED TO BE RELEVANT

| Category* | Citation of document, with indication, where appropriate, of the relevant passages | Relevant to claim No. |
|---|---|---|
| X | WO 2020156136 A1 (TELECOMMUNICATIONS TECHNOLOGY RESEARCH INSTITUTE CO., LTD.) 06 August 2020 (2020-08-06)<br>description, page 7 paragraph 5 to page 25 paragraph 10 | 1, 16-17, 21-22, 37-39, 43 |
| A | CN 112398518 A (DATANG MOBILE COMMUNICATIONS EQUIPMENT CO., LTD.) 23 February 2021 (2021-02-23)<br>entire document | 1-43 |
| A | CN 111614390 A (VIVO COMMUNICATION TECHNOLOGY CO., LTD.) 01 September 2020 (2020-09-01)<br>entire document | 1-43 |
| A | CN 110086519 A (HUAWEI TECHNOLOGIES CO., LTD.) 02 August 2019 (2019-08-02)<br>entire document | 1-43 |
| A | WO 2020164108 A1 (QUALCOMM INC. et al.) 20 August 2020 (2020-08-20)<br>entire document | 1-43 |
| A | US 2020322028 A1 (NOKIA TECHNOLOGIES OY) 08 October 2020 (2020-10-08)<br>entire document | 1-43 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 July 2022** | **16 August 2022** |

| Name and mailing address of the ISA/CN | Authorized officer |
|---|---|
| China National Intellectual Property Administration (ISA/CN)<br>No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/100576** |

**C.    DOCUMENTS CONSIDERED TO BE RELEVANT**

| Category* | Citation of document, with indication, where appropriate, of the relevant passages | Relevant to claim No. |
| --- | --- | --- |
| A | CATT. "CSI Enhancements for Rel-17" <br> *3GPP TSG RAN WG1 Meeting #105-e R1-2104488*, 12 May 2021 (2021-05-12), <br> entire document | 1-43 |

Form PCT/ISA/210 (second sheet) (January 2015)

**INTERNATIONAL SEARCH REPORT**
Information on patent family members

| International application No. |
| --- |
| **PCT/CN2022/100576** |

| Patent document cited in search report | | | Publication date (day/month/year) | Patent family member(s) | | | Publication date (day/month/year) |
| --- | --- | --- | --- | --- | --- | --- | --- |
| WO | 2020156136 | A1 | 06 August 2020 | CN | 111525947 | A | 11 August 2020 |
| | | | | KR | 20210116590 | A | 27 September 2021 |
| | | | | CN | 111525947 | B | 12 November 2021 |
| | | | | EP | 3920431 | A1 | 08 December 2021 |
| | | | | EP | 3920431 | A4 | 06 April 2022 |
| | | | | US | 2022116093 | A1 | 14 April 2022 |
| CN | 112398518 | A | 23 February 2021 | | None | | |
| CN | 111614390 | A | 01 September 2020 | WO | 2020238906 | A1 | 03 December 2020 |
| | | | | BR | 112021024025 | A2 | 11 January 2022 |
| | | | | KR | 20220011737 | A | 28 January 2022 |
| | | | | US | 2022085856 | A1 | 17 March 2022 |
| | | | | EP | 3979516 | A1 | 06 April 2022 |
| CN | 110086519 | A | 02 August 2019 | CN | 110086519 | B | 14 July 2020 |
| | | | | VN | 78580 | A | 25 June 2021 |
| | | | | BR | 112021005856 | A2 | 27 July 2021 |
| WO | 2020164108 | A1 | 20 August 2020 | TW | 202040957 | A | 01 November 2020 |
| | | | | US | 2022131585 | A1 | 28 April 2022 |
| | | | | EP | 3925079 | A1 | 22 December 2021 |
| | | | | CN | 113424455 | A | 21 September 2021 |
| US | 2020322028 | A1 | 08 October 2020 | WO | 2020208297 | A1 | 15 October 2020 |
| | | | | US | 10972170 | B2 | 06 April 2021 |
| | | | | CN | 113678383 | A | 19 November 2021 |
| | | | | IN | 202147050790 | A | 03 December 2021 |
| | | | | VN | 83727 | A | 25 January 2022 |
| | | | | EP | 3954056 | A1 | 16 February 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110690582